(19) Europäisches Patentamt
European Patent Office
Office européen des brevets

(11) EP 3 979 164 A1

(12) # EUROPEAN PATENT APPLICATION

(43) Date of publication:
**06.04.2022 Bulletin 2022/14**

(21) Application number: **21198574.2**

(22) Date of filing: **23.09.2021**

(51) International Patent Classification (IPC):
***G06Q 10/06*** *(2012.01)*

(52) Cooperative Patent Classification (CPC):
**G06Q 10/0631**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.10.2020 US 202063086948 P**
**17.09.2021 US 202117478413**

(71) Applicant: **Kohler Co.**
**Kohler, WI 53044 (US)**

(72) Inventors:
- **SINHA, Sudhi R**
**400076 Mumbai (IN)**
- **ONUR, Orkun**
**Greenville, 29607 (US)**
- **BAINES, Andrew**
**Gloucester, GL52 6SU (GB)**

(74) Representative: **Barker Brettell LLP**
**100 Hagley Road**
**Edgbaston**
**Birmingham B16 8QQ (GB)**

(54) **SYSTEMS AND METHODS FOR MONITORING AND CONTROLLING A BATHROOM**

(57) At least one embodiment includes an apparatus for the real time correlation of bathroom assets for maintenance requirements. The apparatus includes at least one flow sensor configured to generate water usage data for a bathroom device, at least one presence sensor configured to generate user presence data for a room including the bathroom device, and a controller configured to analyze the usage data and the user presence data to generate a maintenance message in response to the analysis.

1050
1052
Receive water usage data for a bathroom device from at least one flow sensor.
1054
Receive user presence data for a vicinity of the bathroom device from at least one presence sensor.
1056
Analyze the water usage data and the user presence data.
1058
Generate a maintenance message in response to the analysis.

FIG. 10B

EP 3 979 164 A1

Printed by Jouve, 75001 PARIS (FR)

## Description

CROSS-REFERENCE TO RELATED APPLICATIONS

This application claims priority benefit to U.S. Provisional Utility Application Serial No. 63/086,948 entitled "SYSTEMS AND METHODS FOR MONITORING AND CONTROLLING A BATHROOM," filed on October 2, 2020, and to U.S. Non-Provisional Patent Application No. 17/478,413, filed on September 17, 2021, the entire disclosures of which are hereby incorporated by reference.

BACKGROUND

The present disclosure relates generally to bathrooms and bathroom devices such as plumbing fixtures (e.g., faucets, toilets, etc.), mirrors, lights, and related products that may be found in a kitchen or bathroom environment. More specifically, the present disclosure relates to systems and methods for monitoring and controlling a bathroom or other environment using networked devices.

SUMMARY

At least one embodiment relates to devices, systems, methods, and/or user interfaces associated with a smart bathroom, smart kitchen, and/or smart clean room.

At least one embodiment may include an apparatus for real time correlation of bathroom assets for maintenance requirements. The apparatus includes at least one flow sensor configured to generate water usage data for a bathroom device, at least one presence sensor configured to generate user presence data for a room including the bathroom device, and a controller configured to analyze the usage data and the user presence data to generate a maintenance message in response to the analysis. In some examples, the apparatus may include a display configured to provide an identifier for the room or the bathroom device in associated with the maintenance message in response to the analysis.

The maintenance message may include dispatch information for maintenance personnel. The maintenance message may be broadcast to a plurality of devices. The maintenance message may include diagnostic information. The maintenance message may include a part number for a consumable or a replaceable component. The maintenance message may include a preventative action. The maintenance message may include a cleaning request.

In at least one example, the at least one flow sensor detects an electronically controlled valve or a water flow through the electronically controlled valve. In at least one example, the at least one presence sensor detects motion in the room.

At least one embodiment may include an apparatus for monitoring hygiene in a bathroom. The apparatus may include at least one flow sensor configured to generate usage data for the bathroom, at least one user sensor configured to generate user hygiene data based on use activities in the bathroom, and a controller configured to analyze the usage data and the hygiene data to calculate a hygiene score for the bathroom. For example, the controller may compare the hygiene score to a threshold. The controller is configured to generate a maintenance message in response to the hygiene score. The hygiene score is calculated at a predetermined time interval.

In one example, the hygiene score is a first hygiene score and the bathroom is a first bathroom, and the controller receives at least one second hygiene score associated with a second bathroom and calculates a composite score based on the first hygiene score and the second hygiene score.

At least one embodiment may include a method for real time correlation of bathroom assets for maintenance requirements including receiving water usage data for a bathroom device from at least one flow sensor, receiving user presence data for a vicinity of the bathroom device from at least one presence sensor, analyzing the usage data and the user presence data, and generating a maintenance message in response to the analysis. The method may also include displaying the maintenance message and at least one identifier for the bathroom device.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

BRIEF DESCRIPTION OF THE DRAWINGS

FIG. 1 shows a perspective view of a building having at least one bathroom, according to an illustrative embodiment.

FIG. 2 show a bathroom of FIG. 1 having smart devices, according to an illustrative embodiment.

FIG. 3 shows the bathroom of FIG. 2 having plumbing, according to an illustrative embodiment.

FIG. 4 shows a block diagram of a system for interacting with smart devices in a building, according to an illustrative embodiment.

FIG. 5 shows a data platform for controlling smart devices in a building, according to an illustrative embodiment.

FIG. 6 shows an application layer for interacting with smart devices in a building, according to another illustrative embodiment.

FIG. 7 shows a system for integrating one or more smart devices with a building management system (BMS), according to an illustrative embodiment.

FIG. 8 shows a block diagram of an analytics system, according to an illustrative embodiment.

FIG. 9 shows a method of calculating a hygiene score, according to an illustrative embodiment.

FIG. 10a shows a method of performing predictive maintenance, according to an illustrative embodiment.

FIG. 10b shows a method of performing real time correlation of multiple data sources or bathroom assets for maintenance requirements, according to an illustrative embodiment.

FIG. 11 shows a method of alarm prioritization, according to an illustrative embodiment.

FIG. 12 shows a method of generating an occupancy for a space, according to an illustrative embodiment.

FIGS. 13-18 show various user interfaces for displaying information associated with a smart bathroom and/or receiving user input, according to various illustrative embodiments.

FIGS. 19-33 show various user interfaces for controlling one or more smart devices and/or smart spaces and monitoring building performance, according to various illustrative embodiments.

## DETAILED DESCRIPTION

Referring generally to the FIGURES, systems and methods for controlling an environment such as a bathroom or kitchen and related devices (such as a plumbing fixture, mirror, etc.) are disclosed herein.

In various embodiments, spaces such as bathrooms, kitchens, clean rooms, and the like may include one or more devices. For example, a bathroom may include toilets, faucets, sinks, automatic soap dispensers, flushometers, and/or the like. In various embodiments, such devices improve cleanliness, increase user satisfaction, and/or promote efficiency. In some embodiments, at least one or more of such devices may include features that allow such devices to communicate and/or form a network. For example, an automatic faucet may be equipped with a Bluetooth communication system and configured to transmit information on water usage to a controller. Such devices may be referred to as smart devices. Smart devices may be integrated into a space such as a bathroom to form a smart space. For example, a bathroom may be equipped with smart faucets, smart flushometers, and/or smart leak detectors that are networked in an internet of things (IoT) architecture and facilitate advanced analytics on bathroom usage, maintenance, resource consumption, and/or the like. Systems, methods, and apparatuses of the present disclosure relate to devices, smart devices, smart spaces, controllers for interacting with smart devices and/or smart spaces, user interfaces, algorithms for processing data from smart devices and/or smart spaces, and more.

One embodiment of the present disclosure relates to maintenance of devices and/or spaces. For example, systems of the present disclosure may facilitate associating specific devices (e.g., faucets, toilets, sanitizing stations, etc.) to entities such as spaces (e.g., bathrooms, kitchens, etc.), facilities (e.g., buildings, campuses, etc.), and/or individuals (e.g., a building owner, a manager, a company, a division, etc.). In various embodiments, systems of the present disclosure may facilitate remote monitoring of parameters such as device state (e.g., ON, OFF, FAULT, etc.), usage (e.g., gallons of water consumed, etc.), flow-rate, and/or the like relating to devices and/or spaces. In some embodiments, one or more user interfaces (UI) are provided. For example, a mobile application may facilitate visualizing floorplans, devices, alarms, usage statistics, and/or the like associated with various spaces. As another example, systems of the present disclosure may facilitate maintenance and/or displaying problems related to devices, spaces, and/or facilities. In some embodiments, systems of the present disclosure may trigger and/or schedule maintenance actions with little to no user input (e.g., automatically). In some embodiments, a dashboard is provided to display alarms and/or alerts associated with devices and/or spaces (e.g., for use by facility maintenance staff, etc.). In various embodiments, systems of the present disclosure may facilitate recording maintenance interventions and/or notifying individuals of events (e.g., maintenance actions, alarms, predicted maintenance problems, etc.). For example, a UI may be provided to facilitate recording maintenance actions such as replacing a device battery or restocking a consumable (e.g., toilet paper, etc.). In some embodiments, systems of the present disclosure may remotely and/or automatically fix problems associated with a device and/or space. For example, a controller may automatically shut off a faucet in response to detecting a free-flow condition associated with the faucet. In some embodiments, systems of the present disclosure may predict maintenance problems. For example, a predictive maintenance system may predict a device failure that has yet to occur based on performance deterioration. In some embodiments, such predicted maintenance problems may be presented to a user with a UI. In some embodiments, systems of the present disclosure may provide one or more dashboards to facilitate visualization of information. For example, a system may provide a dashboard of maintenance issues, avoided maintenance issues (e.g., based on interventions, etc.), and/or financial savings associated with the avoided maintenance issues. Systems of the present disclosure may support communication with various systems. For example, systems of the present disclosure may communicate with an order management system (OMS) via an application programming interface (API) to process work orders, identify maintenance issues, and/or update resolution statuses. In various embodiments, systems of the present disclosure facilitate periodic and/or condition based maintenance scheduling. In some embodiments, replacement parts may be ordered with limited user input (e.g., one-click, etc.).

Another embodiment of the present disclosure relates to sustainability. For example, systems of the present disclosure may facilitate remote monitoring of resource consumption such as water consumption for devices, spaces, facilities, and/or the like. In some embodiments, a sustainability dashboard displays resource consumption (e.g., water consumption, etc.) over time. In some embodiments, systems of the present disclosure may facilitate calculating and/or displaying LEED points (e.g., in real-time, as a one-off, etc.).

Another embodiment of the present disclosure relates to leak detection. For example, systems of the present disclosure may facilitate identifying potential water leakage based on usage and flow rate information captured from devices (e.g., faucets, flowmeters, etc.). Additionally or alternatively, potential water leaks may be identified based on sensor information (e.g., identifying moisture, etc.). In some embodiments, systems of the present disclosure facilitate identifying and/or reporting on freeze conditions. For example, a system may identify a water leak, determine there are freezing conditions in the area of the water leak, and send an alert to a building management system (BMS) and/or an insurance provider.

Another embodiment of the present disclosure relates to facility management. For example, a system may be provided for scheduling cleaning of a space such as a bathroom based on usage of the space. In various embodiments, system of the present disclosure may monitor device performance and/or utilization associated with a space. In some embodiments, systems of the present disclosure may capture customer feedback and perform analytics using the customer feedback. For example, users may fill out a satisfaction questionnaire using a mobile device after using a bathroom and an analytics system may use the feedback to identify bathrooms that require cleaning. In various embodiments, systems of the present disclosure may facilitate capturing information from cleaning staff such as cleaning reports and/or feedback. In some embodiments, systems of the present disclosure may generate alerts based on water leakage and/or freeze detection information. In various embodiments, systems of the present disclosure may generate alerts associated with consumables based on a threshold (e.g., high usage, low levels remaining, etc.). In some embodiments, systems of the present disclosure may monitor water pressure and/or flow and generate alerts based on thresholds (e.g., a sudden drop in pressure, etc.). In some embodiments, systems of the present disclosure facilitate ordering consumables (e.g., toilet paper, soap, etc.) with limited user input (e.g., one-click, etc.). In some embodiments, a UI for receiving user complaints and/or resolving problems is provided. For example, users may indicate that a faucet is leaking or a hand dryer is broken using a mobile application.

Another embodiment of the present disclosure relates to hygiene and infection control. In various embodiments, systems of the present disclosure may capture handwashing effectiveness, calculate trends, and/or determine hand-hygiene scores. In some embodiments, systems of the present disclosure may monitor duty flushing. For example, a frequency of duty flushing associated with a bathroom may be used to calculate an infection control score for the bathroom. In some embodiments, automatic and/or user-defined duty flushing schedules may be established to facilitate infection control. In some embodiments, systems of the present disclosure monitor space sanitization (e.g., cleaning, etc.). For example, a frequency of cleaning may be used to calculate an infection control score associated with a bathroom. In some embodiments, systems of the present disclosure initiate usage-based sanitization for spaces such as bathrooms. In some embodiments, one or more displays positioned in and/or near a space may display information associated with the space (e.g., infection control scores, usage statistics, etc.).

Another embodiment of the present disclosure relates to analytics. For example, a system of the present disclosure may facilitate collection and analysis of device and/or space data. In some embodiments, systems of the present disclosure facilitate generating compliance data, collection of data associated with certifications, product improvement analytics, and/or other analytics.

Another embodiment of the present disclosure relates to one or more applications for smart spaces. For example, systems of the present disclosure may provide a mobile application to manage smart bathrooms, smart kitchens, smart clean rooms, smart surgical preparation rooms, and/or the like.

The accompanying figures illustrate certain exemplary embodiments in detail, although it should be understood that the present disclosure is not limited to the details or methodology set forth in the description or illustrated in the figures. It should also be understood that the terminology used herein is for the purpose of description only and should not be regarded as limiting.

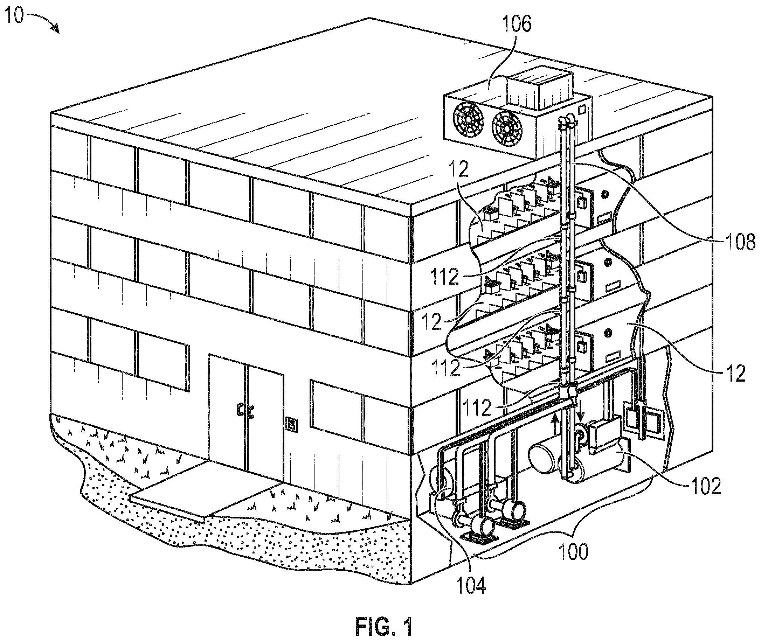

Turning now to FIG. 1, a perspective view of building 10 is shown. Building 10 may include one or more rooms or spaces such as bathrooms 12. Bathrooms 12 may be served by plumbing system 100. In some embodiments, plumbing system 100 is managed using a building management system (BMS). For example, a BMS may be used to monitor devices (e.g., plumbing fixtures, etc.) within bathrooms 12. It should be understood that while building 10 is shown to include plumbing system 100, building 10 may include other systems such as a HVAC system, a security system, a lighting system, a fire alerting system, and/or associated components and/or systems. For example, building 10 may include a plurality of HVAC devices (e.g., heaters, chillers, air handling units, pumps, fans, thermal energy storage, etc.),

Plumbing system 100 is configured to generate heated and/or cooled liquid for use within building 10. For example, plumbing system 100 may heat water for use in bathrooms 12. Additionally or alternatively, plumbing system 100 may transport liquids for use within building 10. For example, plumbing system 100 may send hot and cold water to bathrooms 12 and receive waste water from bathrooms 12. Plumbing system 100 is shown to include heater subplant 102, chiller subplant 104, heat exchanger 106, and piping 108. In various embodiments, plumbing system 100 includes additional and/or different components. For example, plumbing system 100 may include subcomponents and/or systems such as boilers, chillers, steam plants, heat plants, sensors, pumps, valves, thermal energy storage (TES) subplants, condensers, and/or the like.

In various embodiments, plumbing system 100 utilizes one or more working fluids (e.g., water, glycol, CO2, refrigerant, coolant, etc.). For example, plumbing system 100 may use a working fluid to exchange thermal energy (e.g., by transferring heat from a fluid to air, etc.). In various embodiments, components and/or systems of plumbing system 100 are located in or around building 10 (e.g., as shown in FIG. 1). Additionally or alternatively, plumbing system 100 (or a component thereof) may be located at an offsite location such as a central steam plant.

Heater subplant 102 and/or chiller subplant 104 may consume resources (e.g., water, natural gas, electricity, etc.) from utilities to serve thermal energy loads (e.g., hot water, cold water, heating, cooling, etc.) of building 10. Heater subplant 102 and/or chiller subplant 104 may include one or more hot water and/or cold water loops. For example, heater subplant 102 may include a hot water loop that delivers hot water to a zone of building 10 and then returns the water for further heating.

Heater subplant 102 and/or chiller subplant 104 may include a variety of equipment configured to facilitate the functions of the subplant. For example, heater subplant 102 may include a plurality of heating elements (e.g., boilers, electric heaters, etc.) configured to add heat to water in a hot water loop. As another example, chiller subplant 104 may include several pumps configured to circulate cold water in a cold water loop and/or to control the flow rate of the cold water through individual chillers. Heater subplant 102, chiller subplant 104, and/or heat exchanger 106 may include various components such as refrigeration circuits, pumps, cooling towers, condensers, TES tanks, valves, pipelines, tanks, and/or the like.

Heater subplant 102 may heat fluids and/or provide fluids to devices and/or spaces within building 10, such as bathrooms 12. In various embodiments, heater subplant 102 includes one or more heating elements configures to transfer thermal energy to a fluid and one or more pumps configures to deliver the heated fluid to an area. For example, heater subplant 102 may include a boiler configured to burn natural gas, heat water, and deliver water to faucets within bathrooms 12.

Chiller subplant 104 may cool fluids and/or provide fluids to device and/or spaces within building 10, such as bathrooms 12. In various embodiments, chiller subplant 104 includes one or more cooling mechanisms such as a heat exchanger. In some embodiments, chiller subplant 104 integrates with heat exchanger 106. For example, chiller subplant 104 may cool an intermediate working fluid using heat exchanger 106 and then cool water using the intermediate working fluid. In various embodiments, chiller subplant 104 provides fluid to bathrooms 12. For example, chiller subplant 104 may provide cold water to bathrooms 12 for use in toilets and/or faucets.

Heat exchanger 106 is configured to exchange heat between one or more masses. For example, heat exchanger 106 may include an air handling unit configured to facilitate exchanging thermal energy between a working fluid and air. In various embodiments, heat exchanger 106 exchanges fluids with heater subplant 102 and/or chiller subplant 104 using piping 108. Piping 108 may provide one or more fluids to bathrooms 12. For example, service line 112 may supply hot and/or cold water to each of bathrooms 12 from piping 108.

It should be understood that the building 10 illustrated in FIG. 1 is provided only by way of example for discussing the concepts herein, and that various other types of buildings and structure are possible without deviating from the scope of the concepts disclosed herein.

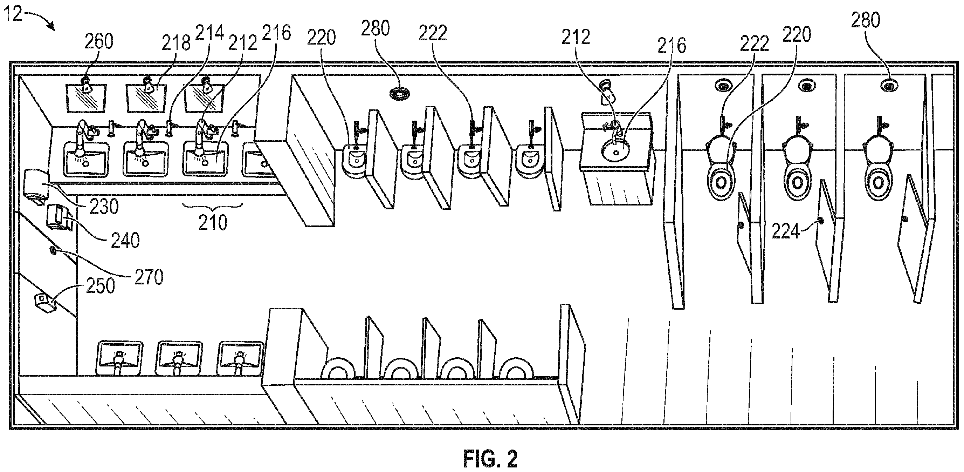

Turning now to FIG. 2, one of bathrooms 12 is shown, according to an exemplary embodiment. Bathroom 12 may be a room for personal hygiene activities. In some embodiments, bathroom 12 is a smart bathroom and/or includes one or more smart devices. Bathroom 12 is shown to include sink 210, toilet 220, hand drier 230, paper-towel dispenser 240, hand sanitizer dispenser 250, lights 260, locks 270, and motion sensors 280 (e.g., "the devices"). In some embodiments, bathroom 12 includes additional and/or different devices. Sink 210 may include faucet 212, dispenser 214, basin 216, and mirror 218. Toilet 220 may include flush device 222. Toilet 220 may be or include a bidet, a toilet, and/or a urinal. In various embodiments, the devices (e.g., faucet 212, hand drier 230, lights 260, etc.) in bathroom 12 are smart devices. For example, paper-towel dispenser 240 may include a Bluetooth communication circuit configured to communicate consumable levels, usage statistics, and/or other analytics to a controller. The devices may communicate via any wired or wireless communication method known in the art or which may be developed in the future. For example, the devices may communicate via a wireless communication protocol (e.g., WiFi, Bluetooth, 3G/4G/5G, 802.15.4, Zigbee, etc.), a proprietary building equipment protocol (e.g., BACNet, Zigbee, Modbus, etc.), an Internet Protocol (IP), a cellular network, a WAN, the Internet, and/or a contextual protocol (e.g., RESTful API, CoAP, HTTP, AMQP, MQTT, etc.).

It should be understood that any of the devices in bathroom 12 (e.g., toilet 220, paper-towel dispenser 240, lights 260, etc.) may be smart connected devices capable of measuring and reporting on various usage parameters and/or sending and receiving signals from a controller such as a BMS. For example, a BMS may be used to control plumbing fixtures, lights, a smart mirror, and so forth within bathroom 12. In various embodiments, devices within bathroom 12 include one or more processing circuits. For example, the devices may include an application-specific integrated circuit (ASIC), a display, one or more sensors, and/or the like. In some embodiments, the devices may connect to a controller. In some embodiments, bathroom 12 includes sensors configured to measure activity within bathroom 12. For example, bathroom 12 may include radar sensors, laser or light sensors, infrared sensors, ultrasonic sensors, cameras (along with image processing software), and so forth. The sensors may generate data associated with conditions within bathroom 12 and/or activity within bathroom 12 (e.g., usage levels, congestion, cleanliness levels, wait times, supply levels, etc.). In various embodiments, a controller is used to communicate with and/or control devices within bathroom 12. For example, the controller may be configured to control a plumbing fixture (e.g., sink 210, toilet 220, etc.) and/or device (e.g., lights 260, locks 270, etc.). In some embodiments, the controller is communicably coupled to one or more valves (e.g., digital valves) corresponding to the plumbing fixtures. For example, the controller may be communicably coupled to a hot water valve corresponding to a hot water source and a cold water valve corresponding to a cold water source (or to a coupled mixing valve, as the case may be). In some embodiments, the controller is configured to generate valve control signals corresponding to the plumbing fixtures and/or devices.

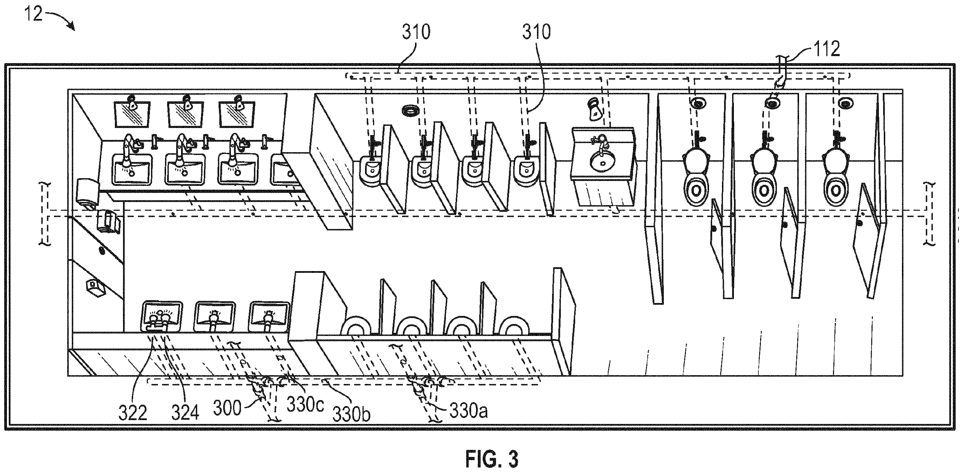

Turning now to FIG. 3, plumbing in bathroom 12 is shown, according to an exemplary embodiment. In various embodiments, bathroom 12 is served by plumbing system 100. For example, plumbing system 100 may provide hot and/or cold water to bathroom 12 and/or manage waste water (e.g., greywater, blackwater, etc.) generated by use of bathroom 12. In various embodiments, bathroom 12 receives liquids via service line 112. Service line 112 may feed distribution branch 310. In various embodiments, distribution branch 310 supplies one or more endpoints 320. In various embodiments, each endpoint 320 corresponds to a plumbing fixture (e.g., faucet 212, toilet 220, etc.). Each endpoint 320 may include hot water line 322 and/or cold water line 324 served by service line 112. For example, service line 112 may be split into a hot water service line and a cold water service line that receive water from plumbing system 100. In various embodiments, one or more plumbing stacks 300 manage waste water from bathroom 12. For example, plumbing stack 300 may receive waste water from sink 210 and transport the wastewater away for disposal or reuse. In various embodiments, plumbing stack 300 receives liquid from one or more arterial pipes. Plumbing stack 300 may travel vertically between floors of building 10. In various embodiments, sensors 330a-c are positioned on and/or around the various piping of bathrooms 12. For example, sensor 330a may be positioned within plumbing stack 300. Additionally or alternatively, sensor 330b may be positioned on an outside surface of distribution branch 310. Sensors 330a-c may be or include leak detection sensors. In various embodiments, sensors 330a-c measure a flow within piping of bathroom 12. Additionally or alternatively, sensors 330a-c may measure a moisture level in an area associated with piping (e.g., detect the presence of water, etc.).

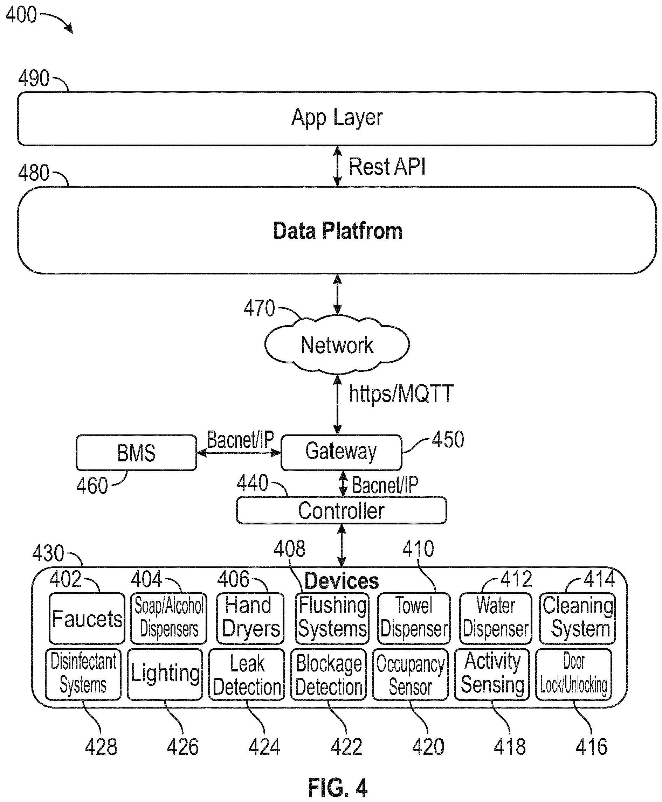

Turning now to FIG. 4, system 400 for monitoring and controlling devices and/or spaces is shown, according to an exemplary embodiment. System 400 may facilitate interactions with one or more devices, such as the devices of FIG. 3. For example, system 400 may facilitate collecting interaction information associated with use of a bathroom and/or controlling one or more devices within a bathroom. System 400 is shown to include devices 430, controller 440, gateway 450, BMS 460, data platform 480, and application layer 490. In various embodiments, one or more components of system 400 communicate via network 470. In various embodiments, communications via network 470 is direct (e.g., local wired or wireless communications) or via a communications network (e.g., a WAN, the Internet, a cellular network, etc.). For example, network 470 may include an Ethernet card and port for sending and receiving data via an Ethernet-based communications link or network. In another example, network 470 may include a WiFi transceiver for communicating via a wireless communications network. In another example, network 470 may include cellular or mobile phone communications transceivers. In one embodiment, network 470 is a power line communications interface. In other embodiments, network 470 is an Ethernet interface.

Devices 430 may be smart connected building devices configured to send and receive communications with one or more controllers. For example, devices 430 may include a smart flushometers configured to send consumption data and receive duty flushing commands. In various embodiments, devices 430 are Bluetooth devices. In some embodiments, devices 430 may integrate with a building management system (such as BMS 460, etc.). For example, a conversion layer may convert Bluetooth packets from devices 430 into a protocol used by BMS 460 (e.g., BACnet, Modbus, etc.) to facilitate bi-directional communication. In various embodiments, devices 430 are electronic devices such as automatic soap dispensers or touchless faucets.

Devices 430 are shown to include faucets 402, sanitizing dispensers 404, driers 406, flushing systems 408, towel dispenser 410, water dispenser 412, cleaning system 414, locking system 416, activity sensor(s) 418, occupancy sensor(s) 420, blockage detection 422, leak detection 424, lighting 426, and disinfectant systems 428. Faucets 402 may be or include a valve for controlling the release of a liquid such as water for use in hand washing. In some embodiments, faucets 402 are automatic (e.g., touchless faucet, etc.). Sanitizing dispensers 404 may be or include a device that dispenses soap or other disinfectants such as alcohol based disinfectants. Driers 406 may be or include an air blower and/or heating element configured to dry hands after hand washing. Flushing systems 408 may be or include a flushometers or other system for controlling the release of water in a toilets and/or urinals. In various embodiments, flushing systems 408 are configured to perform duty flushing. In some embodiments, flushing systems 408 detect when a toilet and/or urinal has been used and trigger a flush event (e.g., release of water into a toilet and/or urinal, etc.) in response. Towel dispenser 410 may be or include a device that dispenses towels for use in hand drying after hand washing. Towel dispenser 410 may dispense paper, cloth, or any other material towel. In various embodiments, towel dispenser 410 is a touchless towel dispenser (e.g., motion activated, etc.). Water dispenser 412 may be or include a device configured to dispense water. For example, water dispenser 412 may include a drinking fountain or a water bottle filler. Cleaning system 414 may be configured to clean one or more surfaces within a space. For example, cleaning system 414 may include an ultra-violet (UV) light configured to sanitize a countertop of a bathroom. In various embodiments, cleaning system 414 automatically (e.g., with little or no human intervention) cleans, disinfects, and/or sanitizes one or more surfaces within an environment. For example, cleaning system 414 may automatically clean a urinal using a disinfectant such as bleach in response to determining that the urinal was used. Locking system 416 may be or include one or more locks. For example, locking system 416 may include door locks. In various embodiments, locking system 416 facilitates remote control of one or more locks. For example, a user may remotely trigger a backroom door to lock using locking system 416. Locking system 416 may lock bathroom doors, stall doors, kitchen doors, closet doors, and/or any other secured aperture.

Activity sensor(s) 418 may be or include devices configured to measure activity within a space. For example, activity sensor(s) 418 may include proximity sensors, motion sensors, and/or the like. In some embodiments, activity sensor(s) 418 are embedded in other devices. For example, faucets 402 may include an activity sensor configured to measure a consumption of water. Occupancy sensor(s) 420 may be configured to measure an occupancy of an environment such as a bathroom. In various embodiments, occupancy sensor(s) 420 include motion sensors, infrared sensors, ultrasonic sensors, microwave sensors, and/or the like. In various embodiments, information from occupancy sensor(s) 420 may be used to control one or more other systems. For example, flushing systems 408 may trigger a flush event in response to occupancy sensor(s) 420 identifying a presence of an individual in a bathroom associated with the flushing system. Blockage detection 422 may be configured to detect pipe blockages. For example, blockage detection 422 may include one or more sensors located within pipes associated with a toilet and/or sink and configured to detect a blockage in the pipes. Blockage detection 422 may include flow sensors, pressure sensors, and/or the like. Leak detection 424 may be configured to detect leaks associated with piping and/or devices. For example, leak detection 424 may be configured to detect and identify a location of a leak associated with a water faucet. Leak detection 424 may include flow sensors, pressure sensors, and/or the like. For example, leak detection 424 may compare a flow rate associated with a faucet to a flow rate associated with a pipe supplying the faucet to determine a leak exists in the pipe supplying the faucet. Lighting 426 may be or include one or more lights. For example, lighting 426 may include one or more smart lights configured to be controlled remotely (e.g., to change a light intensity, color, etc.). In some embodiments, lighting 426 includes controls to response to emergency situations (e.g., emergency lighting, etc.). Disinfectant systems 428 may be configured to disinfect one or more surfaces within a space. For example, disinfectant systems 428 may be configured to disinfect a door handle in a bathroom.

Devices 430 may transmit a current status, analytics results, fault detections, measurements, an identity, an equipment model that represents each device, and/or other information to the various entities with which devices 430 are connected or communicably coupled to. For example, a smart faucet may interact with an occupant, an OEM, and a contractor directly. A leak alarm from a smart leak detector may be sent to data platform 480 to orchestrate replacement or initiate a maintenance project.

In various embodiments, devices 430 connect to controller 440. Controller 440 may be a dedicated controller within a BMS. In some embodiments, controller 440 is a cloud-based server (i.e. an internet-based server). For example, controller 440 may be physically located in one or more server farms and accessible via an internet connection. In some embodiments, controller 440 is a standalone device in a peer-to-peer (P2P) network. Controller 440 may communicate via various connections such as cellular (3G, 4G, LTE, CDMA, etc.), Wi-Fi, ZigBee, Bluetooth, RF, LoRa, etc. Controller 440 may include wired interfaces such as USB, Firewire, Lightning Connectors, CAT5 (wired internet), UART, serial (RS-232, RS-485), etc. In some embodiments, controller 440 may include a network connection, such as a BACnet network connection. Controller 440 may be or include a Bluetooth router. In various embodiments, controller 440 is configured to convert between various communication protocols. For example, controller 440 may facilitate integration of Bluetooth devices with a BMS, translation of memory maps between systems/devices, and seamless integration of new devices. In some embodiments, controller 440 is physically located in proximity to devices 430.

In various embodiments, controller 440 communicates with gateway 450. Gateway 450 may be or include an internet of things (IoT) gateway configured to create a memory map of devices 430, register standard objects such as sensors, and manage devices 430. In various embodiments, gateway 450 is a bridge between devices 430, BMS 460, and/or network 470. For example, gateway 450 may receive Bluetooth signals from controller 440 and communicate the signal using a BACnet protocol to BMS 460 and an MQTT protocol to network 470.

BMS 460 may be configured to facilitate management and control of a building such as building 10. For example, BMS 460 may be implemented in building 10 to automatically monitor and control various building functions. BMS 460 may include a BMS and a plurality of building subsystems such as a building electrical subsystem, an information communication technology (ICT) subsystem, a security subsystem, a HVAC subsystem, a lighting subsystem, a lift/escalators subsystem, and a fire safety subsystem. In some embodiments, the building subsystems include plumbing system 100 as described with reference to FIG. 1. Each of the building subsystems may include any number of devices, controllers, and connections for completing its individual functions and control activities.

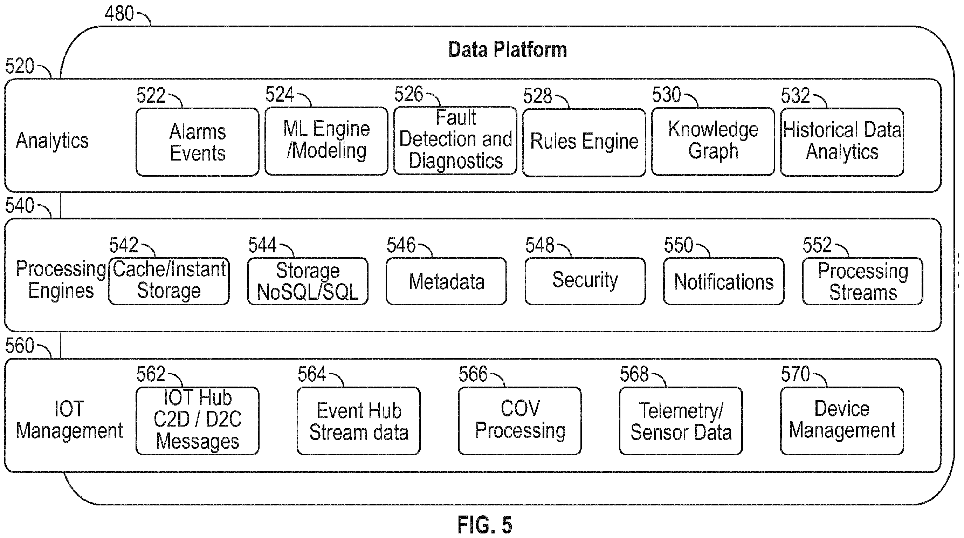

In various embodiments, gateway 450 communicates with data platform 480 via network 470. Data platform 480 may facilitate analysis and control of devices 430 based on information from devices 430. For example, data platform 480 may include a graph data structure that represents one or more spaces where devices 430 are deployed and data platform 480 may receive information from devices 430, update the graph data structure, and determine actions associated with the spaces based on the graph data structure (e.g., ordering maintenance, refilling consumables, identifying alarms, etc.). Data platform 480 may facilitate performing statistical operations on data received from devices 430 and identifying actions based thereon. For example, data platform 480 may perform Bayesian analysis of alarm data from devices 430 to predict device failures and automatically order maintenance for devices 430. In some embodiments, data platform 480 is implemented within a single computer (e.g., one server, one housing, etc.). Additionally or alternatively, data platform 480 may be distributed across multiple servers or computers (e.g., that can exist in distributed locations). Further, while FIG. 4 shows data platform 480 existing outside of BMS 460, in some embodiments, data platform 480 hosted within BMS 460. Data platform 480 is discussed in detail below with reference to FIG. 5.

In various embodiments, data platform 480 provides a user interface to interact with users. For example, data platform 480 may interact with users via application layer 490. In various embodiments, data platform 480 communicates with application layer 490 via a REST API. However, it should be understood that any communication protocol known in the art may be used. Application layer 490 may provide visualization of information associated with devices 430, spaces such as bathrooms 12, and/or buildings such as building 10. For example, a facility maintenance manager may utilize a mobile application from application layer 490 to manage operation of a number of smart spaces in offices throughout a region. In various embodiments, application layer 490 includes one or more user interfaces. For example, application layer 490 may include a maintenance UI, a sustainability UI, a leak detection UI, a facility management UI, a hygiene/infection control UI, an enterprise UI, and/or a smart spaces UI. Application layer 490 is discussed in greater detail below.

Turning now to FIG. 5, data platform 480 is shown, according to an exemplary embodiment. As discussed above, data platform 480 may facilitate analysis of information related to devices 430. Data platform 480 may operate as a remote system that receives and processes data provided by smart connected devices and/or equipment from many different buildings. Data platform 480 may leverage the data provided by devices 430 to provide a variety of services. Services provided by data platform 480 may include, for example, device management, data routing and real-time analytics, data management services, and batch analytics. Additionally, data platform 480 may include monitoring and reporting applications, fault detection and diagnostics (FDD) applications, data analytics, IoT management, and automated service provider recommendations. For example, a smart faucet may report water consumption to data platform 480 and data platform 480 may combine the water consumption data with flow rate data collected from flow sensors in piping feeding the smart faucet to identify leaks in the piping feeding the smart faucet.

Data platform 480 may be a central system that connects devices 430 (e.g., faucets and/or any other devices, toilets, etc.), buildings, people, and businesses. For example, devices 430 may provide their current status, analytics results, fault detections, measurements, identity information, equipment models that represent devices 430, and/or other information associated with devices 430 to data platform 480. Data platform 480 may perform analytics on the data provided by devices 430. Analytics may be used to facilitate the various services provided by data platform 480. For example, data platform 480 may build statistical models that use data from devices 430 to infer patterns, perform comparisons, perform trend analyses and predictions, or even teach devices 430 to correct themselves (e.g., by providing adjusted operating parameters to devices 430, etc.).

Data platform 480 may use the data from devices 430 to determine how devices 430 are being used, to broaden the value proposition beyond the physical equipment, to include valuable data and value-added services, and to form closer relationships with customers. Data platform 480 may create usage reports for sales, marketing and product development to improve quality and create better pricing and product positioning. Data platform 480 may provide the usage reports to various people (e.g., a building owner, a facility manager, etc.) to provide insight into how devices 430 are being used. In some embodiments, data platform 480 augments data from devices 430 with external data (e.g., weather data, utility data, meter data, building occupancy, etc.) to provide extra information for better decision making.

Data platform 480 may facilitate increased uptime for devices 430, reduced future repair costs, extended asset life, using service experts with operational and trend data to assist in troubleshooting, and higher service renewal. Data platform 480 may be configured to implement a condition-based maintenance program to shorten the time to repair via remote diagnostics and optimized logistics in parts ordering and tool rentals. Data platform 480 may facilitate decreasing a number of unplanned repairs, optimizing routine maintenance intervals, and reducing routine maintenance.

Data platform 480 uses the data provided by devices 430 to help customers to better operate the equipment and to better enable service technicians to service the equipment. The connectivity provided by devices 430 allows data platform 480 to monitor the equipment for critical alarms and notify service technicians if any issues arise. As the amount of collected data increases, the analytics model used by data platform 480 continues to learn and improve over time. The analytics model may use the information from devices 430 to identify opportunities for creating new physical products or even new information products. For example, data platform 480 may identify opportunities to combine the functionality of two or more existing products (e.g., a motion sensor with a flush system) to develop a new and improved product. The new and improved products may include, for example, a sensor or controller that can perform diagnostics and self-troubleshooting and/or other types of functionality that may eliminate the need for other products.

Advantageously, the connectivity provided by data platform 480 may facilitate a ubiquitous connection of various types of equipment within a building. Machine learning provided by data platform 480 may use information provided by devices 430 to develop a comprehensive view of controls in the building environment. In some embodiments, data platform 480 provides building operators with a visually clean and intuitive view of the building operations and the ability to resolve issues in real-time. As more information is gathered regarding the patterns of how the building works, and under what circumstances and parameters, this information can be used by people outside of the manufacturing and building industry to improve products and services that affect the building.

Data platform 480 may reduce service operational costs and increase efficiency. For example, advanced diagnostics and remote monitoring capabilities provided by data platform 480 may reduce the time required for a service technician to troubleshoot an issue. This may reduce the time spent performing service calls and may improve productivity. Data platform 480 may enhance the value of installed equipment. For example, data platform 480 may analyze the usage information from devices 430 to provide insights to customers and optimize the performance of devices 430. A building owner or operator can interact with data platform 480 (e.g., via a monitoring and control interface) to obtain current status information, control parameters, diagnostic information, and other types of information related to the installed equipment (e.g., equipment manuals, warranty information, etc.). The control functionality provided by data platform 480 may make controls seamless and transparent to building owners and operators.

Data platform 480 may create more value for customers with minimal physical contact with devices 430. For example, data platform 480 may automatically send updates to devices 430 to enhance features and fix bugs. Analytics provided by data platform 480 may provide customers with information (e.g., via an interface of a mobile device) to act upon on potential failures in their equipment or building.

Data platform 480 may allow an equipment/service vendor to increase its customer base with better differentiated products and services. For example, data platform 480 can recommend specific types of equipment and/or services that would provide value to a customer based on the usage information gathered from the customer's equipment. Additionally, data platform 480 as a whole can be provided as a service to new and existing customers.

Data platform 480 may create new business models and opportunities. For example, data platform 480 may allow a contractor to increase the number of service contracts and margins. The usage information from devices 430 may also be provided to an insurance provider. The insurance provider may use the usage information to determine an appropriate risk level for a building, which allows the insurance provider to set more accurate insurance premiums. The proactive repair and replacement suggestions provided by data platform 480 may decrease the number of failures (e.g., by repairing or replacing equipment before failures occur), which reduces insurance claims and improves the margins of an insurance contract.

Data platform 480 may use data analytics to analyze information provided by devices 430. Such data analytics may include, for example, modeling, graphing, and scaling out the information provided by devices 430. Data analytics may further include real-time data analytics and machine learning. Data platform 480 may aggregate information from devices 430 across buildings to improve the capabilities and efficiency of devices 430 (e.g., improving the autonomous control decisions, etc.). Data platform 480 may develop richer and more flexible models to integrate data from different buildings (e.g., richer schema). Data platform 480 may also develop richer analytical models (e.g., graph and probabilistic models) to deal with data heterogeneity and the added complexity of modeling across buildings (e.g., using other data to add context such as local/national laws and environmental/weather related operational considerations). In some embodiments, data platform 480 facilitates conserving resources. For example, data platform 480 may execute predictive analytics to forecast future water consumption and recommend way to decrease water consumption for a building based on historical data for other buildings in the region. In some embodiments, devices 430 may augmented the computing power and control capabilities of data platform 480.

Data platform 480 is shown to include analytics 520 (e.g., alarms events 522, machine learning engine 524, fault detection and diagnostics (FDD) 526, rules engine 528, knowledge graph 530, historical data analysis 532, etc.), processing engines 540 (e.g., cache/instant storage 542, storage NoSQL/SQL 544, metadata 546, security 548, notifications 550, processing streams 552, etc.), and IoT management (e.g., IoT hub 562, event hub 564, COV processing 566, telemetry/sensor data 568, and device management 580, etc.). In some embodiments, data platform 480 includes one or more processing circuits having one or more processors coupled to one or more memories storing instructions that, when executed by the one or more processors, cause the one or more processing circuits to carry out the operations described herein. In various embodiments, one or more components of data platform 480 is constituted as machine-readable instructions (e.g., such as those stored on one or more memories and executed by one or more processors, etc.).

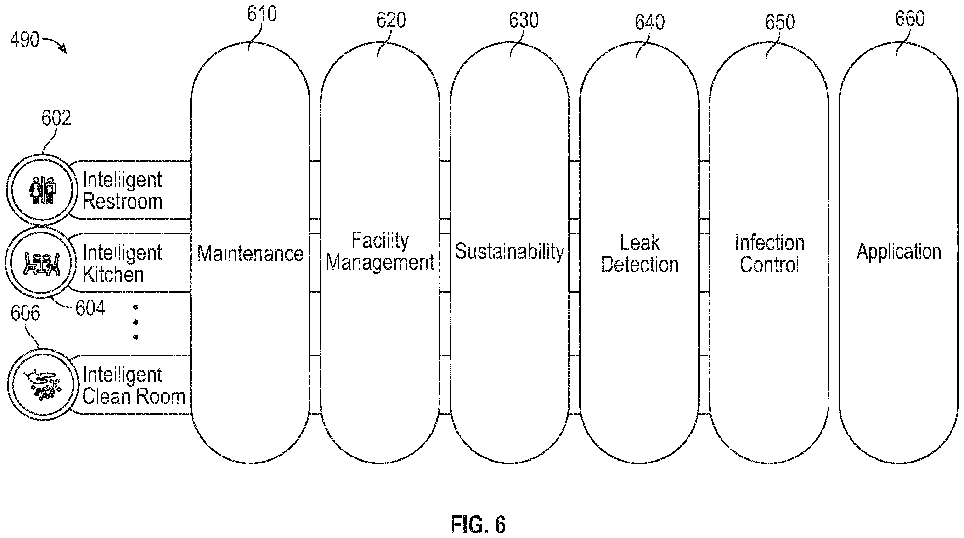

Referring now to FIG. 6, application layer 490 is shown according to an exemplary embodiment. Application layer 490 may facilitate data visualization and generating actions based on analysis from data platform 480. In various embodiments, application layer 490 may include one or more mobile applications. Additionally or alternatively, application layer 490 may include desktop applications or applications running on a remote server (e.g., accessible over the Internet, etc.). In some embodiments, application layer 490 may facilitate generating one or more user interfaces which may be provided to building owners, contractors, and the like to facilitate interaction with building 10 and/or devices 430. Application layer 490 is shown to include a number of use cases such as intelligent restroom 602, intelligent kitchen 604, and intelligent clean room 606. However, it should be understood that application layer 490 may include a different number and/or composition of use cases and that the underlying systems (e.g., data platform 480, etc.) may be used to process data from various use cases.

Intelligent restroom 602 may facilitate viewing and managing information associated with one or more smart bathrooms. For example, intelligent restroom 602 may facilitate controlling devices 430 within bathrooms 12. In various embodiments, intelligent restroom 602 displays analytics generated by data platform 480 based on analysis of information from devices 430. Additionally or alternatively, intelligent restroom 602 may facilitate controlling devices 430 within a smart bathroom (e.g., bathrooms 12, etc.). For example, a building manager may use intelligent restroom 602 to remotely turn off a water faucet. In some embodiments, intelligent restroom 602 is usable by individuals to interact with a smart bathroom. For example, a user may consult a kiosk outside of a smart bathroom and the kiosk may execute an instance of intelligent restroom 602 configured to display usage information associated with the smart bathroom and direct the user to one or more other smart bathrooms within a building. In addition or in the alternative to the kiosk, a mobile device may display information associated with the smart bathroom. Thus, automated determination and display of usage, feedback, and alternative availability data about restrooms and related facilities through a tablet or other kiosk device outside the restroom may also be simultaneously paired with a mobile device (e.g., smartphone).

Intelligent kitchen 604 may facilitate viewing and managing information associated with one or more smart kitchens. For example, intelligent kitchen 604 may facilitate controlling a smart faucet or smart oven hood within a smart kitchen. In various embodiments, intelligent kitchen 604 displays analytics generated by data platform 480 based on analysis of information from smart devices (e.g., devices 430, etc.). In some embodiments, intelligent kitchen 604 is usable by individuals to interact with a smart kitchen. For example, a user may consult a mobile device to identify the last time a grease trap was cleaned from an oven-hood and schedule routine maintenance of the oven-hood.

Intelligent clean room 606 may facilitate viewing and managing information associated with one or more smart clean rooms. For example, intelligent clean room 606 may facilitate controlling a laminar flow cabinet to initiate an automated cleaning process. In various embodiments, intelligent clean room 606 displays analytics generated by data platform 480 based on analysis of information from smart devices (e.g., devices 430, etc.). In some embodiments, intelligent clean room 606 is usable by individuals to interact with a smart clean room. For example, a user may consult a mobile device to identify the last time a laminar flow cabinet filter was cleaned and schedule routine maintenance of the cabinet.

Application layer 490 may facilitate various features shown as maintenance 610, facility management 620, sustainability 630, leak detection 640, infection control 650, and mobile application 660. Maintenance 610 may facilitate reviewing maintenance information associated with devices and/or spaces. For example, a user may review maintenance schedules, device alarms, and the like associated with a smart bathroom. Facility management 620 may facilitate reviewing, scheduling, and performing related tasks associated with facility management. For example, facility management 620 may allow a user to review resource supplies associated with a space (e.g., paper towel levels, soap levels, etc.) and schedule replenishment thereof. Sustainability 630 may facilitate monitoring resource consumption (e.g., water, electricity, etc.) associated with a smart space (e.g., bathrooms 12, etc.). Additionally or alternatively, sustainability 630 may facilitate calculating sustainability metrics such as LEED points. Leak detection 640 may facilitate detecting and locating leaks. For example, a user may receive a notification on a mobile device indicating that a leak associated with a faucet has been detected. Infection control 650 may facilitate cleaning of devices and/or spaces. For example, infection control 650 may monitor usage of a smart bathroom and schedule cleaning of the bathroom in response to detecting increased contamination levels (e.g., bad air quality, dirty surfaces, etc.). Additionally or alternatively, infection control 650 facilitates calculating one or more scores associated with an infection level associated with a device and/or space. Mobile application 660 may facilitate user interaction. For example, users may interact with application layer 490 via mobile application 660 on a mobile device. As another example, a user using mobile application 660 may check to see which bathrooms in a building are unoccupied prior to physically traveling to the bathrooms.

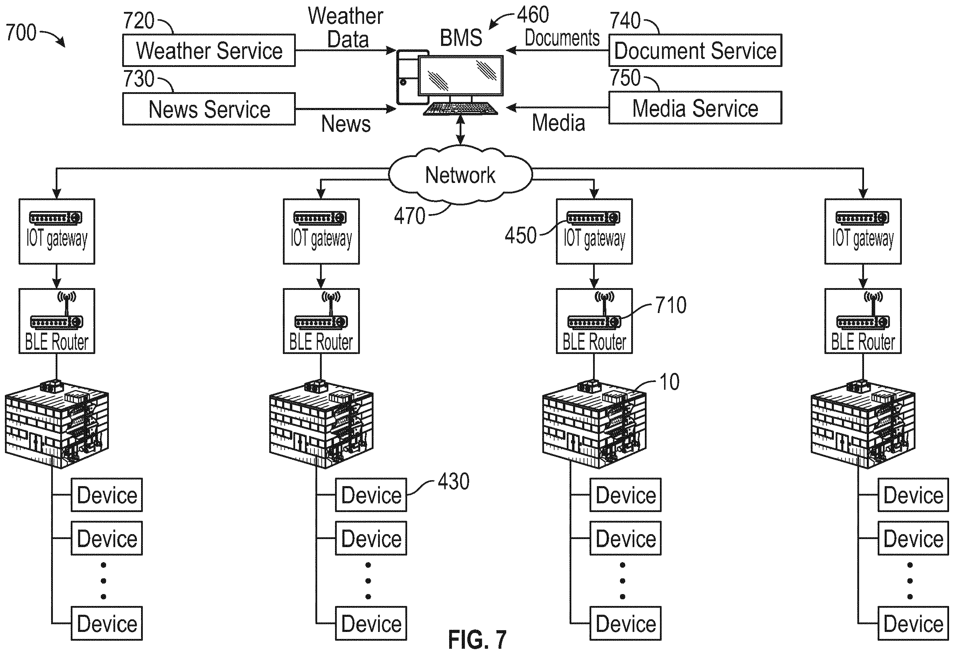

Referring now to FIG. 7, smart building environment 700 for controlling one or more smart devices and/or spaces is shown, according to an exemplary embodiment. Smart building environment 700 is shown to include BMS 460. As described above, BMS 460 may be configured to collect data from a variety of different data sources. For example, BMS 460 is shown collecting data from buildings 10. Each of buildings 10 may include a BMS, a plumbing system, and/or smart devices that are the same as or similar to those shown in FIGS. 1-3. The buildings 10 may include a school, a hospital, a factory, an office building, and/or the like. However it should be noted that the present disclosure is not limited to the number or types of buildings expressly described herein.

BMS 460 can be configured to collect data from a variety of devices 430, either directly (e.g., directly via network 470) or indirectly (e.g., via gateway 450, BLE router 710, etc.). In some embodiments, devices 430 may include voice assist devices, CO2 sensors, motion sensors, other suitable sensors, and/or internet of things (IoT) devices. Voice assist devices may be stand-alone voice assist devices (e.g., a smart speaker having a receiver) or other computing devices having a voice assist application installed thereon (e.g., a mobile phone, tablet, laptop, desktop, and the like). IoT devices may include any of a variety of physical devices, sensors, actuators, electronics, vehicles, home appliances, and/or other devices having network connectivity which enable IoT devices to communicate with BMS 460. For example, IoT devices can include any of the devices described above with reference to FIGS. 1-3, voice assist devices, networked sensors, wireless sensors, wearable sensors, environmental sensors, RFID gateways and readers, IoT gateway devices, robots and other robotic devices, GPS devices, smart watches, smart phones, tablets, virtual/augmented reality devices, and/or other networked or networkable devices. However, the present disclosure is not limited thereto, and it should be understood that, in various embodiments, the devices referenced in the present disclosure could be any type of suitable devices capable of communicating data over an electronic network. In various embodiments, devices 430 are communicably connected to network 470 via gateway 450 and/or BLE router 710. Gateway 450 and/or BLE router 710 may facilitate converting between device protocols. For example, BLE router 710 may receive Bluetooth packets from one or more devices 430 and send the packets to gateway 450 which may convert the Bluetooth packets into a form suitable for communication over the Internet.

BMS 460 may collect data from a variety of external systems or services. For example, BMS 460 is shown receiving weather data from a weather service 720, news data from a news service 730, documents and other document-related data from a document service 740, and media (e.g., video, images, audio, social media, etc.) from a media service 750. In some embodiments, BMS 460 generates data internally. For example, BMS 460 may include a web advertising system, a website traffic monitoring system, a web sales system, or other types of platform services that generate data. The data generated by BMS 460 can be collected, stored, and processed along with the data received from other data sources. BMS 460 may collect data directly from external systems or devices or via network 470 (e.g., a WAN, the Internet, a cellular network, etc.). BMS 460 may process and transform collected data to generate timeseries data and entity data. Several features of BMS 460 are described in more detail below.

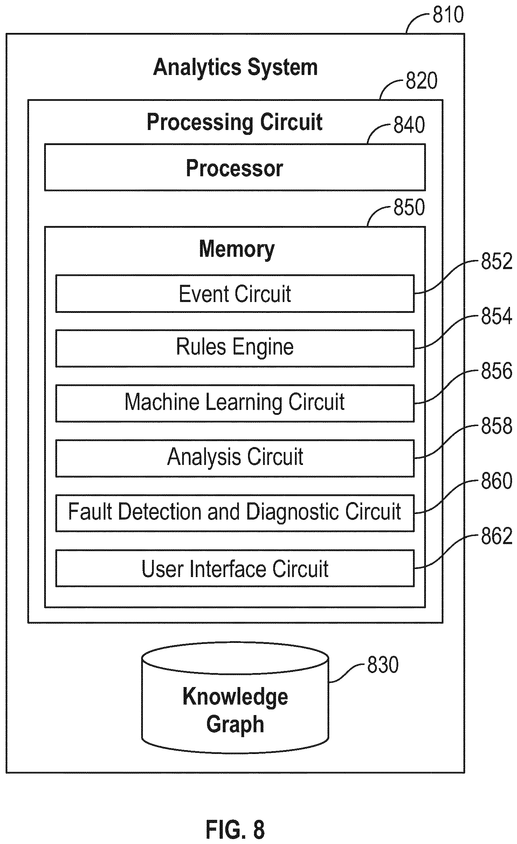

Referring now to FIG. 8, analytics system 810 is shown, according to an exemplary embodiment. In various embodiments, analytics system 810 is integrated into system 400 and/or BMS 460. For example, analytics system 810 may perform one or more of the data analysis operations described herein. Analytics system 810 is shown to include processing circuit 820 and knowledge graph 830. Processing circuit 820 includes processor 840 and memory 850. Analytics system 810 may include one or more processing circuits 820 including one or more processors 840 and one or more memories 850. Each of the processors 840 can be a general purpose or specific purpose processor, an application specific integrated circuit (ASIC), one or more field programmable gate arrays (FPGAs), a group of processing components, or other suitable processing components. Each of the processors 840 is configured to execute computer code or instructions stored in memory 850 or received from other computer readable media (e.g., CDROM, network storage, a remote server, etc.).

Memory 850 may include one or more devices (e.g., memory units, memory devices, storage devices, or other computer-readable media) for storing data and/or computer code for completing and/or facilitating the various processes described in the present disclosure. Memory 850 may include random access memory (RAM), read-only memory (ROM), hard drive storage, temporary storage, non-volatile memory, flash memory, optical memory, or any other suitable memory for storing software objects and/or computer instructions. Memory 850 may include database components, object code components, script components, or any other type of information structure for supporting the various activities and information structures described in the present disclosure. Memory 850 may be communicably connected to processor(s) 840 via processing circuit 820 and may include computer code for executing (e.g., by processor 840) one or more processes described herein.

Memory 850 may include event circuit 852, rules engine 854, machine learning circuit 856, analysis circuit 858, fault detection and diagnostic (FDD) circuit 860, and user interface circuit 862. Event circuit 852 may manage alarms and events associated with devices and/or spaces within a building. In various embodiments, event circuit 852 displays problems and/or faults associated with devices 430 to a user. For example, event circuit 852 may receive a signal indicating that a leak is detected in a bathroom and may generate an alert for a user to be displayed on a mobile device of the user. As another example, event circuit 852 may receive an event from a smart bathroom indicating that the smart bathroom has recently been cleaned. In various embodiments, event circuit 852 includes a user interface. For example, event circuit 852 may generate a dashboard to display information associated with devices and/or spaces to a user (e.g., alarms, events, system information, etc.). In some embodiments, event circuit 852 provides notifications to users as an email or link.

Rules engine 854 is configured to execute one or more rules on data to produce results. In various embodiments, rules engine 854 includes a database storing one or more rules. Additionally or alternatively, rules engine 854 may receive rules from an external system. The rules may be user defined or may be generated automatically based on machine analysis. For example, rules engine 854 may generate rules for synthetic fault identification and root cause analysis. As an additional example, rules engine 854 may implement Bayesian analysis to generate a model of expected alarm behavior and generate rules based on a deviation of observed alarm behavior from the model. The rules may provide criteria that can be evaluated to detect faults in the timeseries data. For example, the rules may define a fault as a data value above or below a threshold. As another example, the rules may define a fault as a value outside a predetermined range. In various embodiments, rules engine 854 is configured to detect faults in timeseries data. Rules engine 854 may detect faults in raw timeseries data and/or optimized timeseries data. Rules engine 854 may apply the rules to timeseries data to determine whether each sample of the timeseries data qualifies as a fault. In some embodiments, rules engine 854 generates a fault detection timeseries containing the results of the fault detection. The fault detection timeseries can include a set of timeseries values, each of which corresponds to a data sample of the timeseries data evaluated by rules engine 854. In some embodiments, each timeseries value in the fault detection timeseries includes a timestamp and a fault detection value. The timestamp can be the same as the timestamp of the corresponding data sample of the data timeseries. The fault detection value can indicate whether the corresponding data sample of the data timeseries qualifies as a fault. For example, the fault detection value can indicate "fault" if a fault is detected and "not fault" if a fault is not detected in the corresponding data sample.

Machine learning circuit 856 may build and/or execute one or more machine learning models. For example, machine learning circuit 856 may generate a model representing alarm events within a building and may execute the model to predict one or more alarm events. In some embodiments, machine learning circuit 856 recursively updates one or more models to improve accuracy. For example, machine learning circuit 856 may receive timeseries event data from devices 430, generate a model representing the operation of devices 430, predict one or more events associated with devices 430, and update the model based on the observed behavior of devices 430. Machine learning circuit 856 may execute one or more machine learning algorithms. For example, machine learning circuit 856 may perform supervised learning, unsupervised learning, reinforcement learning, self-learning, feature learning, dictionary learning, anomaly detection, and/or rule-based learning. In some embodiments, machine learning circuit 856 generates or executes one or more models. For example, machine learning circuit 856 may execute an artificial neural network, a decision tree, a support vector machine, regression analysis, a Bayesian network, genetic algorithms, training models, and/or federated learning. In various embodiments, machine learning circuit 856 generates one or more outputs associated with devices 430.

Analysis circuit 858 may analyze system performance and generate recommendations for improving performance. For example, analysis circuit 858 may analyze historical timeseries data associated with measurements from leak detection sensors and a leak event that was detected to update a leak detection model to improve prediction accuracy in the future. In various embodiments, analysis circuit 858 is coupled to a database including or otherwise receives historical data. The historical data may be associated with devices 430 and/or spaces such as bathrooms 12. Analysis circuit 858 may analyze the historical data to perform actions such as adjusting the cleaning schedule of a bathroom to improve user satisfaction levels based on historical feedback. In some embodiments, analysis circuit 858 may adjust operating parameters of one or more devices 430. For example, analysis circuit 858 may generate a recommendation to reduce the water temperature associated with a number of faucets in a bathroom based on historically desired water temperatures.

FDD circuit 860 may be configured to provide on-going fault detection for building subsystems, building subsystem devices (i.e., building equipment, devices 430, etc.), and control algorithms. In various embodiments, FDD circuit 860 identifies faults based on analysis of timeseries data. For example, FDD circuit 860 may predict a hand drier failure based on trend analysis of timeseries event data generated by the hand drier. Additionally or alternatively, FDD circuit 860 may identify root causes of various failures. For example, a number of soap dispensers in a bathroom may begin to unexpectedly fail and FDD circuit 860 may identify that a new brand of liquid soap is being used that is too viscous for the soap dispensers and is causing the soap dispensers to fail. FDD circuit 860 may receive data inputs from a controller (e.g., controller 440), directly from one or more building subsystems or devices (e.g., devices 430), or from another data source. FDD circuit 860 may automatically diagnose and respond to detected faults. The responses to detected or diagnosed faults can include providing an alert message to a user, a maintenance scheduling system, or a control algorithm configured to attempt to repair the fault or to work-around the fault.

FDD circuit 860 may be configured to output a specific identification of the faulty component or cause of the fault (e.g., paper towel dispenser low on paper towel) using detailed subsystem inputs. In some embodiments, FDD circuit 860 is configured to provide "fault" events to subsystems (e.g., a local controller, a user, maintenance personnel, etc.) which executes control strategies and policies in response to the received fault events. For example, FDD circuit 860 may shut-down systems or direct control activities associated with devices 430 to reduce energy waste, extend equipment life, or assure proper control response.

FDD circuit 860 may be configured to store or access a variety of different system data stores (or data points for live data). FDD circuit 860 may use some content of the data stores to identify faults at the equipment level (e.g., specific faucets, toilets, etc.) and other content to identify faults at component or subsystem levels. For example, devices 430 may generate temporal (i.e., time-series) data indicating the performance of a bathroom and the various components thereof. The data may include measured or calculated values that exhibit statistical characteristics and provide information about how the corresponding system or process is performing in terms of error from a setpoint. These processes may be examined by FDD circuit 860 to expose when the system begins to degrade in performance and alert a user to repair the fault before it becomes more severe.

User interface circuit 862 is configured to present information to a user and receive user input. For example, user interface circuit 862 may facilitate analytics visualization, natural language processing (NLP), controlled natural language processing (CNLP), and/or intelligent messaging support. In various embodiments, user interface circuit 862 may present information to a user visually. For example, user interface circuit 862 may generate a display for a kiosk that illustrates sanitation parameters associated with a bathroom. Additionally or alternatively, user interface circuit 862 may interact with users via sound. For example, user interface circuit 862 may implement a smart assistant to receive voice commands from a user and respond using audio. In some embodiments, user interface circuit 862 includes tools and functions to facilitate users visually modeling data and algorithms. In some embodiments, user interface circuit 862 implements one or more routines as described below to facilitate individualized messaging for users.

Knowledge graph 830 may store a graph data structure representing entities such as devices, spaces, and/or individuals. In brief overview, the graph data structure is a data structure representing entities (e.g., spaces, equipment, people, events, etc.) and relationships between the entities. In various embodiments, the graph data structure may include nodes and edges, where each node of the graph represents an entity and each edge is directed (e.g., from a first node to a second node) and represents a relationship between entities (e.g., indicates that the entity represented by the first node has a particular relationship with the entity represented by the second node). For example, a graph may be used to represent a smart space such as bathroom 12 having devices 430.

Entities can be things and/or concepts related to spaces, people, and/or assets. For example, the entities could be "faucet #2320", "bathroom #2020," and/or "building #2089." The nodes can represent nouns while the edges can represent verbs. In various embodiments, the edges represent relationships. For example, a graph data structure may have nodes representing a bathroom and its components and edges describe how the component operate. In some embodiments, the nodes include properties or attributes describing the entities (e.g., a faucet having a model number, etc.). The components of the graph form large networks that encode semantic information for a device, space, building, and/or network.

In various embodiments, the graph data structure facilitates advanced artificial intelligence and machine learning associated with the entities (e.g., devices 430, etc.). In various embodiments, entities within the graph data structure include or are associated with software routines configured to take actions with respect to the entities with which they are associated. In some implementations, the routines may be configured to implement artificial intelligence/machine learning methodologies. The routines may be configured to facilitate communication and collection of information between the variety of different data sources. Each of the data sources may be implemented as, include, or otherwise use respective routines for facilitating communication amongst or between the data sources and analytics system 810. The routines of analytics system 810 and data sources may be configured to communicate using defined channels across which the routines may exchange information, messages, data, etc. amongst each other. In some examples, channels may be defined for particular spaces, subspaces, control loops, groups of equipment, people, buildings or groups of buildings, etc. In some implementations, routines may communicate by publishing messages to particular channels and subscribing to messages on particular channels and/or published by particular other routines/types of routines. In various embodiments, the data sources include buildings. For example, analytics system 810 may interact with a number of buildings, each of which may include a routine (or a group of routines corresponding to various building subsystems within the respective building), to receive information. Hence, analytics system 810 and the data sources may together form a network of routines to facilitate artificially intelligent exchange and communication of information across various channels. In some embodiments, one or more device(s), component(s), space(s) (and sets of devices, components, spaces) within analytics system 810 may include a respective routine dedicated to performing various tasks associated therewith. The routines may therefore be dedicated for performing separate functions or tasks.

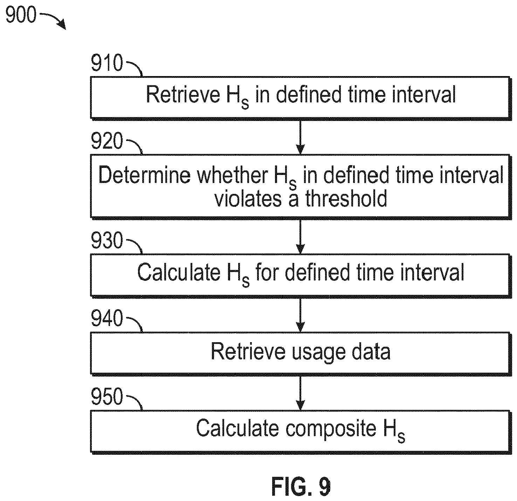

Referring now to FIG. 9, method 900 for calculating a hygiene score is shown, according to an exemplary embodiment. In various embodiments, analytics system 810 or another performs method 900 to analyze sensor data (e.g., usage data and hygiene data) to calculate the hygiene score for the bathroom. Additional, different, or fewer acts may be included.

At step 910, analytics system 810 may retrieve a hygiene score associated with a defined time interval. For example, the time interval may be the last two weeks. In various embodiments, analytics system 810 calculates hygiene scores associated with devices and/or spaces. For example, analytics system 810 may receive sensor data from devices 430 and generate a hygiene score $H_s$ for a bathroom associated with devices 430. The sensor data may include a single type or any combination of example sensor data described herein. The sensor data may include usage data from at least one flow sensor and user hygiene data describing activities in the bathroom from at least one user sensor.

The hygiene score may take into account various information, and may be calculated using such information in a variety of ways. According to one non-limiting example, the hygiene score may be a function of one or more pieces of information. For example, the hygiene score may be calculated as a function of sanitation activities, duty flushing, and hand washing:

$$H_s = f_n(H_{sanitation} * w_{sanitation}, H_{duty\ flushing} * w_{duty\ flushing}, H_{hand\ washing} * w_{hand\ washing})$$

where $H_{sanitation}$ is a hygiene score based on sanitation activities associated with the devices and/or spaces, $H_{duty\ flushing}$ is a hygiene score based on a frequency of duty flushing associated with one or more toilets, and $H_{hand\ washing}$ is a hygiene score based on usage of bathroom sinks for handwashing activities, each of which have a relative weighting applied thereto. For example, $H_{sanitation}$ may be calculated based on a cleaning schedule associated with a bathroom. As an additional example, $H_{sanitation}$ may be calculated based on the presence of specific devices such as touchless doors or faucets. $H_{duty\ flushing}$ is a hygiene score based on duty flushing associated with the devices and/or spaces. For example, $H_{duty\ flushing}$ may be calculated based on a frequency of duty flushing associated with one or more toilets. In some embodiments, $H_{duty\ flushing}$ may be calculated for a space. For example, $H_{duty\ flushing}$ may be calculated for a building according to the formula:

$$H_{duty\ flushing\ building} = \sum_{i=1}^{n} H_{duty\ flushing\ restroom}$$

where each $H_{duty\ flushing\ restroom}$ is associated with a restroom. $H_{hand\ washing}$ is a hygiene score based on hand washing activities associated with the devices and/or spaces. For example, a sink may include one or more sensors configured to monitor a user's handwashing activities and generate a hygiene score based on a time spent washing, a proximity of the users hand to a faucet, a use of soap, a temperature of the water, and/or the like. In some embodiments, $H_{hand\ washing}$ is calculated according to the formula:

$$H_{hand\ washing} = f_n(\sum \frac{H_{active\ washing}}{average\ working\ hygiene\ level})$$

where $H_{active\ washing}$ is a score associated with a specific hand washing parameter (e.g., length of time, proximity to faucet, temperature of water, etc.), and *average working hygiene level* is a score associated with an average level of hygiene in an area. For example, an industrial foundry may have a lower *average working hygiene level* score than a clean room. Each individual hygiene score may have a weight associated with it.

In some embodiments, a composite hygiene score may be calculated. For example, a composite hygiene score may be calculated based on the formula:

$$H_{building} = \sum_{i=1}^{n} H_s$$

where $H_s$ is a hygiene score associated with bathrooms in a building and $n$ is the number of bathrooms in a building. In some embodiments, hygiene score timeseries data may be generated. For example, timeseries data including a number of hygiene scores may take the form:

$$H_{timeseries} = f_{t=1,n}(H_{s,1}, \ldots H_{s,t=n})$$

where each $H_s$ is a hygiene score associated with a specific point in time or period of time.

It should be understood by those reviewing the present disclosure that the method of calculating a hygiene score (or scores) and the inputs to such method may vary according to various exemplary embodiments. Additional or fewer factors may be taken into account, and the number of devices from which data is collected may also vary.

At step 920, analytics system 810 may determine whether the hygiene score in the defined time interval violates a threshold. For example, analytics system 810 may compare the hygiene score to a threshold score associated with an acceptable level of hygiene. Based on the comparison, analytics system 810 may perform one or more actions or generate one or more messages such as a maintenance message. For example, analytics system 810 may alert a cleaning crew to clean a bathroom. At step 930, analytics system 810 may a hygiene score over a defined time interval. In various embodiments, the time interval is different than the time interval in step 910. For example, the time interval may be longer. As a concrete example, analytics system 810 may implement the function shown above to calculate a composite hygiene score based on a number of individual hygiene scores (e.g., calculate a hygiene score for a bathroom based on a number of hygiene scores associated with elements of the bathroom such as hand washing, duty flushing, and sanitation, etc.). Additionally or alternatively, the time interval may be the same and step 930 may include updating a hygiene score.

At step 940, analytics system 810 may retrieve usage data. For example, analytics system 810 may receive frequency of usage and occupancy data associated with a bathroom. In various embodiments, step 940 includes receiving data from devices 430. For example, analytics system 810 may retrieve sensor data from devices 430 describing usage of bathrooms 12. In some embodiments, step 940 includes checking for outliers in the received data with respect to usage and/or frequency. For example, analytics system 810 may detect a surge in usage associated with a particular bathroom. In some embodiments, analytics system 810 may perform one or more actions in response to detecting an outlier. At step 950, analytics system 810 may calculate a composite hygiene score. For example, analytics system 810 may calculate a composite hygiene score based on one or more individual hygiene scores (e.g., calculate a hygiene score for a building based on a number of hygiene scores associated with bathrooms in the building, etc.).

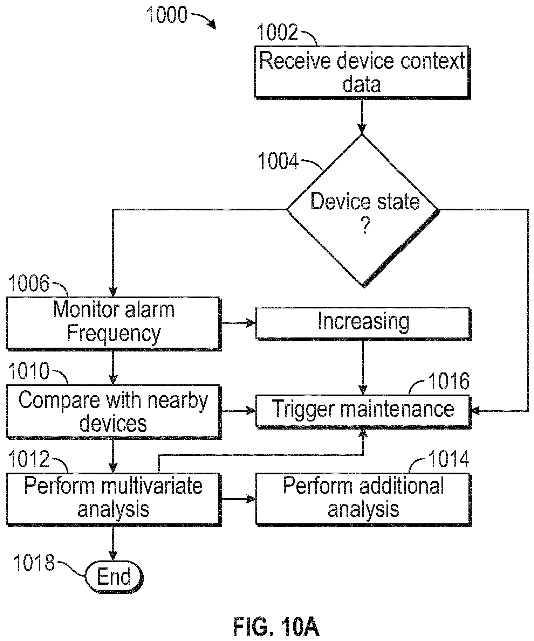

Referring now to FIG. 10A, method 1000 for performing predictive maintenance. In various embodiments, analytics system 810 performs method 1000. For example, analytics system 810 may perform method 1000 to provide predictive maintenance to devices 430. At step 1002, analytics system 810 may receive device context data. The context data may include timeseries and/or trend data associated with devices 430. Additionally or alternatively, the context data may include alarm and/or event data from devices 430. In some embodiments, the context data includes device state data indicating a state of the device (e.g., on, off, sleep, error, fault #303, etc.). At step 1004, analytics system 810 may monitor a device state associated with the device context data. In some embodiments, step 1004 includes checking for outliers associated with the context data. For example, analytics system 810 may identify a sudden increase in alarms associated with a soap dispenser. In some embodiments, step 1004 includes monitoring performance parameters associated with a device. For example, for a DC powered device, run hours, a number of state changes, and time since last battery change may indicate a need to change a battery. As an additional example, for devices that have not been used beyond a time threshold, an age of the device, a state of the device (e.g., an "off state, etc.) may be used to determine whether predictive maintenance is required for the device. If no outliers are found, analytics system 810 may continue processing the context data as normal (e.g., step 1006). If an outlier is found, analytics system 810 may trigger maintenance associated with the outlier (e.g., step 1016).

At step 1006, analytics system 810 may monitor an alarm frequency. In some embodiments, step 1006 includes listing a received device event as an alarm. Additionally or alternatively, step 1006 may include creating a frequency counter associated with an alarm type, a device, and/or a location to track an alarm frequency. In various embodiments, the frequency counter may be stored in an alarm database for future reference and/or historical trending.

If the alarm frequency is increasing, then analytics system 810 may trigger maintenance 1016. For example, analytics system 810 may generate a work order associated with a device. In some embodiments, analytics system 810 compares the alarm frequency to a threshold. For example, analytics system 810 may compare the alarm frequency to a threshold determined based on historical data analysis of a frequency counter associated with a device and/or a type of alarm.

If analytics system 810 determines that an alarm frequency is not increasing enough to trigger step 1016 then analytics system 810 may compare the context data associated with a device and/or space to that of nearby devices and/or spaces. For example, analytics system 810 may compare the operational performance of a faucet to a nearby faucet in the same bathroom to determine if the faucet is consuming too much water (thereby indicating that the faucet may be left on or there may be a leak, etc.). Based on the comparison, analytics system 810 may trigger maintenance (e.g., step 1016). For example, analytics system 810 may determine that a toilet has significantly reduced performance compared to similar toilets in a bathroom and may generate a work order for a technician to inspect the toilet. As another example, if multiple devices is a restroom are failing it may indicate that predictive maintenance on the devices may be needed. Otherwise, analytics system 810 may perform multivariate analysis using the context data to determine whether more rigorous predictive maintenance and/or intervention is required. For example, analytics system 810 may perform analysis using a fault code, a fault timing, a fault duration, a fault occurrence (e.g., frequency, etc.), and/or one or more associated faults to determine if root cause analysis is needed. If analytics system 810 determines additional analysis is needed, then analytics system 810 may perform additional analysis (e.g., step 1014). For example, analytics system 810 may perform a Bayesian analysis of state transitions associated with a device to determine a root cause associated with a number of alarms. Otherwise, the method may end (e.g., step 1018).

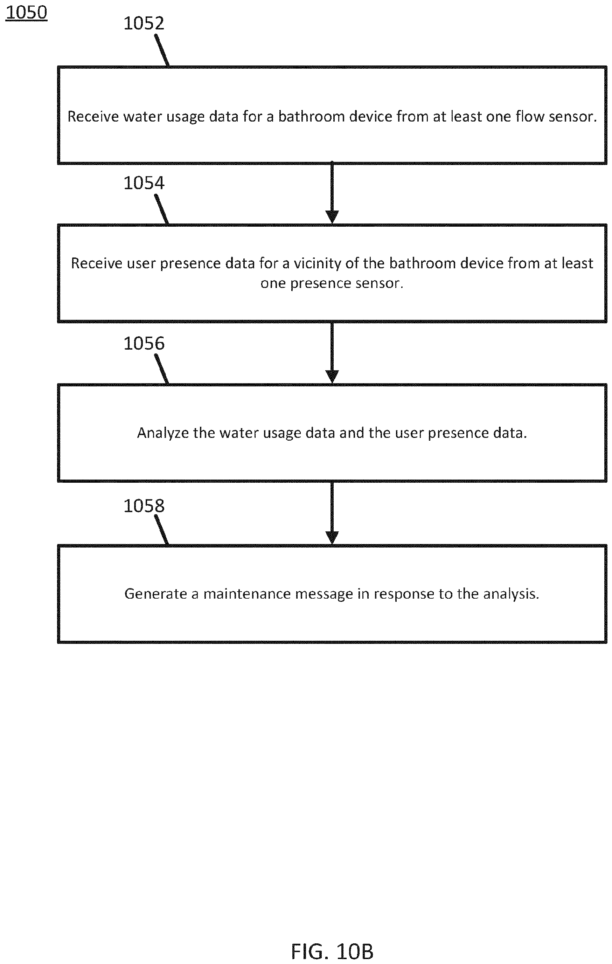

Referring now to FIG. 10B, a method 1050 for performing real time correlation of multiple data sources or bathroom assets for maintenance requirements is shown. In various embodiments, analytics system 810 or another controller performs method 1050. For example, analytics system 810 may perform method 1050 to provide maintenance information to perform the real-time correlation of people, assets, and events to determine control and maintenance requirements for restrooms. Sensor data about when people are visiting the restroom, plumbing and consumable device operational data, alerts, user-reported issues, and other event feed data are used to determine when maintenance is required. Additional, different, or fewer acts may be included.

For example, analytics system 810 may perform method 1050 to provide remote diagnostics of restroom devices from the cloud to identify maintenance issues and corrective actions. The devices are connected remotely and perform diagnostic functions to identify root causes of maintenance problems and determine what fixes should be applied.

For example, analytics system 810 may perform method 1050 to provide a remote command and control of restroom devices from the cloud to implement corrective actions for resolving device performance and maintenance issues.

For example, analytics system 810 may perform method 1050 to provide predictive fault detection and diagnostics using timeseries events generated by device and system performance, and applying machine learning to such events. A machine learning algorithm may consider the trajectory of device performance data, frequency of device reported alerts/errors, and correlate data from multiple devices to understand system level performance to predict maintenance problems and recommend correction actions.

For example, analytics system 810 may perform method 1050 to identify cleaning locations based on device condition, restroom/device usage, and past cleaning events. An algorithmic approach determines the optimal cleaning schedules for restrooms.

At act 1052, analytics system 810 may receive water usage data for a bathroom device from at least one flow sensor. The flow sensor may detect a flow of water through any of the devices (e.g., sink 210, toilet 220, hand sanitizer dispenser 250, etc.). The sensor may be a pressure sensor, an ultrasonic sensor or a light sensor. The light sensor may measure the quantity of water that passes a light beam. The ultrasonic sensor generates an ultrasonic wave that travels through the flow of water and is received at a received. Based on the received ultrasonic wave the volume and/or speed of the flow of water is detected. The sensor may be paired with two polished surface that reflects the ultrasonic wave or the light beam on the opposite side of the flow of water and returns the ultrasonic wave or the light beam to the sensor.

The flow sensor may detect the operation of a valve. The flow sensor may detect a position of the valve or a solenoid operating the valve. Alternatively, an electrical sensor may be used to detect a control signal provided to the solenoid or valve. The electronically controlled valves (e.g., solenoids for actuating the hydraulic valves) are controlled via control signals from one or more controllers. The flow sensor may detect the flow of water. The flow sensor may be an optical sensor aligned with a window to detect motion in a faucet, a pipe, a drain, or other water path. The flow sensor may include an internal water path including a rotor that rotates under the force of the water. The rotations of the rotor (e.g., speed, electrical pulses) may be measured. In one example, a hall effect sensor measures electrical pulses output from the rotating rotor.

At act 1054, analytics system 810 may receive user presence data for a vicinity of the bathroom device from at least one presence sensor. The presence sensor may include one or more radar sensors, laser or light sensors, infrared sensors, ultrasonic sensors, and/or cameras. The sensors may generate data associated with conditions within the bathroom and near the vicinity of the bathroom device.

In some examples, the presence sensor may be proximity sensor (e.g., infrared sensor) or an image collection device described herein. For example, the sensor may be mounted in a neck of a faucet and may detect a gesture or presence of a hand near the neck of the faucet to activate or deactivate the flow of water through the faucet. Alternatively or in addition, the sensor may detect the position or a user within a predetermined radius from the bathroom device. The sensor may be located in or near a doorway to detect people that enter and/or exit the bathroom.

In addition or in the alternative, the analytics system 810 may receive diagnostic data from the bathroom device. The diagnostic data may be collected by the controller 440 or analytics system 810 to determine whether certain components are functioning properly. The diagnostic data may be collected by sending a diagnostic signal to the bathroom device, which returns an acknowledgment signal when the bathroom device is online.

At act 1056, the analytics system 810 (e.g., analysis circuit 858) analyzes the usage data and the user presence data. The analytics system 810 may compare the usage data and the user presence data to one or more thresholds to determine when a maintenance event has occurred or a maintenance event is recommended. For example, a bathroom usage threshold may be used to trigger the maintenance event when a predetermined number of visitors have visited the bathroom. A device usage threshold may be used to trigger the maintenance event when a predetermined number of users or usage time for a particular bathroom device has been reached. In another example, the analytics system 810 may determine the maintenance event when both a predetermined number of visitors have visited the bathroom and a predetermined usage time has been reached for the particular bathroom device. In another example, the analytics system 810 may determine the maintenance event when either a predetermined number of visitors have visited the bathroom or a predetermined usage time has been reached for the particular bathroom device.

The analytics system 810 may analyze the usage data and the user presence data searching for a predetermined pattern in the data. The analytics system 810 may compare a sliding window for a time interval to the usage data and the user presence data. When the predetermined pattern match the data in the window, a maintenance event is determined. The predetermined window may show that a group of users in a set time have visited the bathroom and used a particular set of bathroom devices.

The predetermined pattern may indicate that if one or more high priority bathroom devices are not operational or returning periodic errors, then a maintenance event is determined. The predetermined pattern may indicate that if one or more high priority bathroom devices have returned warnings or partial errors over the time interval, then a maintenance event is determined.

The predetermined pattern may be selected based on a variety of factors. One pattern may be used for a high traffic location (e.g., sports stadium, music venue, or amusement park) and another pattern may be used for a low traffic location (e.g., office building or library). The predetermined pattern may be selected based on time such as day of the weekend, months of the year, or a specific event calendar.

The analytics system 810 may probe the bathroom devices 430 in response to the usage data and the user presence data. A diagnostic request from the analytics system 810 to a bathroom device 430 may cause the bathroom device 430 to run a diagnostic sensing routine. The routine may include a series of operations by the bathroom device 430 and return of status messages for the series of operations. The diagnostic request may be sent to multiple bathroom devices. The analytics system 810 may compare a predetermined pattern to the status messages for the plurality of bathroom devices.

At act 1058, the analytics system 810 (e.g., analysis circuit 858) generates a maintenance message in response to the analysis (i.e., determination of the maintenance event). The maintenance message may be returned to the bathroom device to perform further diagnostic or maintenance routines. The maintenance message may be relayed to a third party to visit the bathroom for repair work, inspection, cleaning or other work. The maintenance message may be relayed to one or more users to report conditions of the bathroom.

The maintenance message may include dispatch information for maintenance personnel. The maintenance message may indicate a location of the bathroom and the number and identity of bathroom devices at the location. The maintenance message may include information that indicates the reason for the maintenance message. That is, the maintenance message may include the number of people that have visited the bathroom since the last maintenance event or indicate a particular bathroom device that has seen high usage. The maintenance event may indicate an error code or fault that has been reported by one of the bathroom devices.

The maintenance message may include diagnostic information. The maintenance message may suggest a problem or particular component that may need service. The analytics system 810 (e.g., analysis circuit 858) may list the identifier for a particular part (e.g., valve) that appears to be operating incorrectly based on the analysis of the sensor data.

The maintenance message may include includes a cleaning request. The cleaning request may include the location of the bathroom and a quantity of bathroom devices. The cleaning request may indicate one or more particular bathroom devices that may require immediate assistance.

The maintenance message may be broadcasted to a plurality of devices. For example, when a maintenance event occurs, an alert is set to a set of mobile devices via the network 470 (e.g., instant message, email, text message, or a proprietary message). The set of mobile devices may be a set of registered users (e.g., workers in a building, members of an organizations, users of an application which have selected the bathroom, or users in proximity to the bathroom). The set of mobile devices may be a set of maintenance or cleaning personnel.

The maintenance message may include a part number for a consumable or a replaceable component. The maintenance message may be sent to a part supplier or store to send a replacement to the location of the bathroom. The maintenance message may prompt the user or service personnel to approve an order of the consumable or replacement components. The consumable may include paper towels, soap, filters, or other periodically replaced materials. The replacement parts may include valves, seals, sensors or other components that may eventually fail and require replacement. Automated identification (service log/ service part replacement log) and ordering or service parts based on device maintenance issues and recommended corrective actions by the system. Once a problem has been identified and diagnosed, the system may automatically determine the replacement parts required to fix the issue and offer that as an orderable option to the end user.

The maintenance message may include a device command. The analytics system 810 (e.g., analysis circuit 858) may include an instruction for the bathroom device to execute. The device command may be a reboot command. In response to the reboot command, the bathroom device may reset the controller and any other electronic components. In response to the reboot command, the bathroom device may also perform a calibration sequence in which each component is probed or pinged to determined correct operation. Accordingly, the device command may also be a calibration command. The command may be a valve opening command. For example, all valves may be opened at the same time, or in a short sequence so that water flow can be tested by the water flow sensor. The command may be a shutoff command that turns off the particular bathroom device 430 or corresponding valve.

The maintenance message may include a preventative action. The analytics system 810 (e.g., analysis circuit 858) may include an instruction to turn off a particular bathroom device when certain conditions have been identified from the sensor data. For example, when is a leak is possible, the particular valve, an upstream valve, or the bathroom device may be turned off.

The maintenance message may be displayed. For example, on the tablet, kiosk, or mobile device described herein. The maintenance message may be displayed by any of the devices 430. The displayed information may include the maintenance message and an identifier for the bathroom (e.g. location code) and/or for the device 430 (e.g., device code).

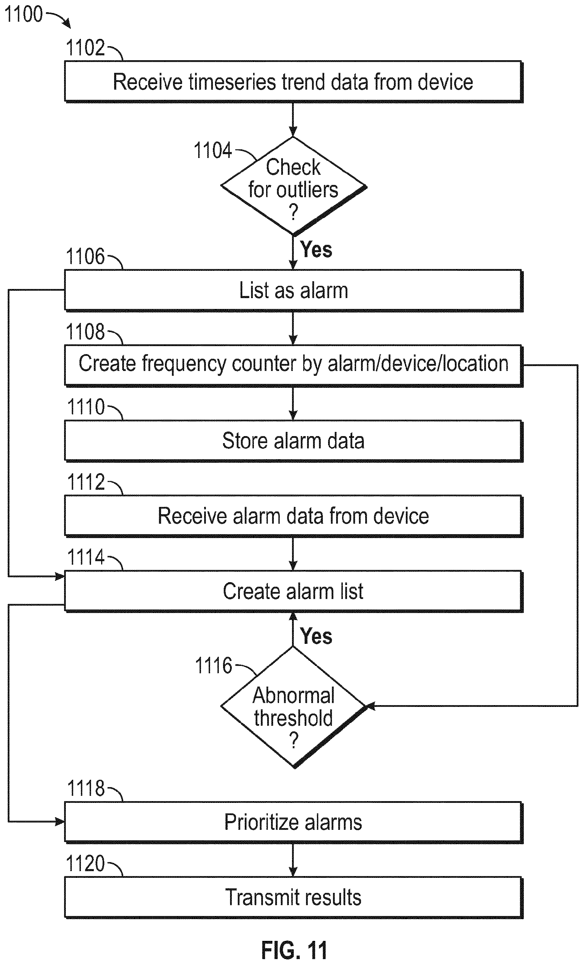

Referring now to FIG. 11, method 1100 for performing issue prioritization is shown, according to an exemplary embodiment. In various embodiments, analytics system 810 performs method 1100. At step 1102, analytics system 810 may receive timeseries trend data from a device. For example, analytics system 810 may receive timeseries trend data from one of devices 430. In some embodiments, analytics system 810 receives timeseries data associated with a number of devices and/or spaces. At step 1104, analytics system 810 may check for outliers. For example, analytics system 810 may identify a sudden increase in the number of alarms associated with a particular bathroom in a building. In no outliers are found, analytics system 810 may perform regular processing. If an outlier is found, analytics system 810 may list the outlier as an alarm (e.g., step 1106). For example, analytics system 810 may create a data object including the timeseries data having the outlier and may store the data object as an alarm. Additionally or alternatively, analytics system 810 may present the alarm to a user (e.g., via a UI, etc.). In various embodiments, analytics system 810 may create an alarm list (e.g., step 1114). The alarm list may facilitate prioritizing alarms. For example, alarms with a high priority may be inserted at the top of the alarm list.

At step 1108, analytics system 810 may create a frequency counter associated with an alarm type, device, and/or location (e.g., a building, etc.). At step 1110, analytics system 810 may store the alarm data. For example, step 1110 may include storing the frequency counter in a database. At step 1116, analytics system 810 may detect an abnormal threshold. For example, analytics system 810 may compare an alarm frequency to an alarm frequency expected for the particular type of alarm and device. If no abnormal threshold is detected, analytics system 810 may store the alarm data as a low priority alarm. For example, analytics system 810 may present the alarm as a low priority alarm on a UI. If an abnormal threshold is detected, analytics system 810 may add an additional alert to the alarm list. For example, analytics system 810 may prioritize the alarm and generate a pop-up message that indicates that the alarm is a high priority alarm. At step 1118, analytics system 810 may prioritize alarms (step 1118). For example, analytics system 810 may update a user interface to display alarms based on a priority determined during steps 1102-1116. In some embodiments, step 1118 includes analyzing the alarm list using an alarm priority engine to determine an alarm priority order (e.g., order alarms on the alarm list according to priority, etc.). For example, step 1118 may include determining alarm priority based on a fraction of devices generated alarms compared to the number of devices in a bathroom, usage of the bathroom, the number of bathrooms on a floor of a building, a frequency (or increase thereof) of alarm activity, a time of alarm occurrence, a time associated with resolving an alarm, an economic impact of the alarm, and/or the like.

At step 1120, analytics system 810 may transmit results. In some embodiments, step 1120 includes transmitting one or more alarms (e.g., individual alarms, the alarm list, etc.). In some embodiments, step 1120 includes displaying a prioritized list of alarms to a user.

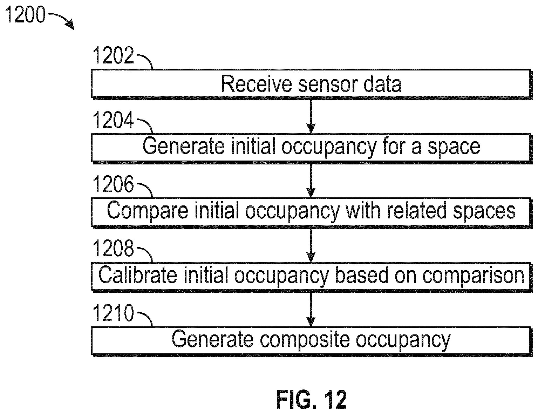

Referring now to FIG. 12, method 1200 is shown for occupancy tracking, according to an exemplary embodiment. In various embodiments, analytics system 810 performs method 1200. For example, analytics system 810 may perform method 1200 as part of an ongoing monitoring and management of a smart bathroom. At step 1202, analytics system 810 may receive sensor data. For example, step 1202 may include receiving sensor data from devices 430. As a concrete example, step 1202 may include receiving a flush frequency from a number of flushomatic devices, occupancy sensor information from a number of occupancy sensors, and/or the like. In various embodiments, step 1202 includes receiving one or more plumbing metrics (e.g., water consumption, flow rate, etc.) and deriving one or more usage parameters such as device usage based on consumption. Additionally or alternatively, device usage such as a frequency of faucet usage may be used to compute occupancy of a bathroom.

At step 1204, analytics system 810 may generate an initial occupancy for a space. For example, analytics system 810 may generate an initial occupancy for the space based on an analysis of usage of individual devices. For example, 15 faucets may be used during a typical afternoon consuming a combined 15 gallons of water and analytics system 810 may determine that 11 individuals used the bathroom based on the usage/consumption data. In various embodiments, step 1204 includes comparing usage/consumption data to one or more lookup tables and/or historical data. At step 1206, analytics system 810 may compare the initial occupancy with related spaces. For example, analytics system 810 may compare the initial occupancy associated with a bathroom to occupancy measurements associated with other bathrooms on the same floor. Based on this comparison, analytics system 810 may generate a confidence metric associated with the initial occupancy. At step 1208, analytics system 810 may calibrate the initial occupancy based on the comparison. For example, analytics system 810 may cancel noise from related devices using the comparison. As an additional example, analytics system 810 may increase an occupancy prediction based on determining that users using similar spaces were found to not wash their hands, thereby causing the system to underestimate the number of individuals using a bathroom based on water consumption data. At step 1210, analytics system 810 may generate a composite occupancy. For example, analytics system 810 may combine one or more individual occupancy measurements to form a composite occupancy associated with a space (e.g., combine bathroom occupancies to estimate a building occupancy, etc.). In various embodiments, step 1210 includes analyzing additional data. For example, analytics system 810 may further analyze visitor logs for a particular day and combine the number of expected visitors with the individual occupancy measurements associated with various bathrooms to determine a building occupancy.

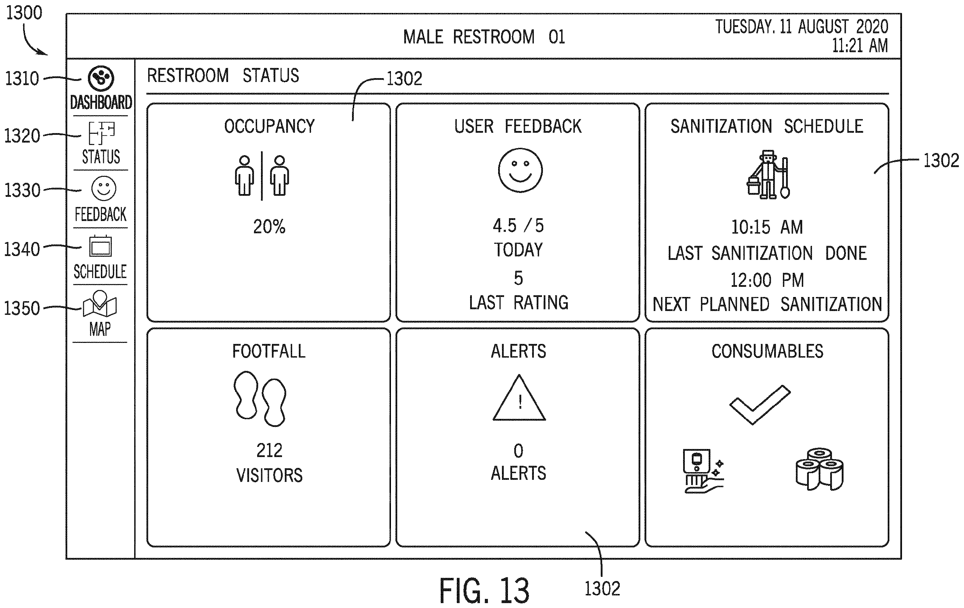

Referring now to FIGS. 13-33, various user interfaces are shown for interacting with the systems and components described herein, according to an exemplary embodiment. For example, the various user interfaces may be used to monitor various parameters associated with a smart bathroom and/or operation of devices 430. In FIG. 13, dashboard 1300 is shown for monitoring a smart bathroom, according to an exemplary embodiment. Dashboard 1300 may include several widgets configured to display information associated with a bathroom. For example, dashboard 1300 may be displayed on a kiosk outside a bathroom or via a mobile application to facilitate displaying bathroom information to users and/or receiving user feedback from users. Dashboard 1300 may include views 1310-1350. Views 1310-1350 may be associated with various functionalities of the user interface. In various embodiments, selection of one of views 1310-1350 causes a new user interface to open. Views 1310-1350 may include a dashboard view, a status view, a feedback view, a schedule view, and/or a map view. Dashboard 1300 is shown to include panels 1302. Panels 1302 may display specific information to a user associated with a devices and/or spaces. For example, panels 1302 may display usage information associated with a smart kitchen, bathroom, or clean room. In various embodiments, panels 1302 display information related to occupancy, user feedback, a sanitization schedule, space footfall, alerts, and/or consumable levels. For example, one of panels 1302 may display a current occupancy of a smart bathroom (such as one of bathrooms 12). As another example, one of panels 1302 may display an average user feedback rating associated with a space. In some embodiments, panels 1302 display other information such as the last time a sanitization of the space was performed, the timing of a next scheduled sanitization of the space, a number of visitors to the space (e.g., associated with a time period, etc.), if any alerts associated with the space and/or components exist, and/or whether there are any consumables (e.g., toilet paper, etc.) available. In various embodiments, dashboard 1300 facilitates users to quickly and easily view a space status, such as a bathroom, at a glance before entering the space.

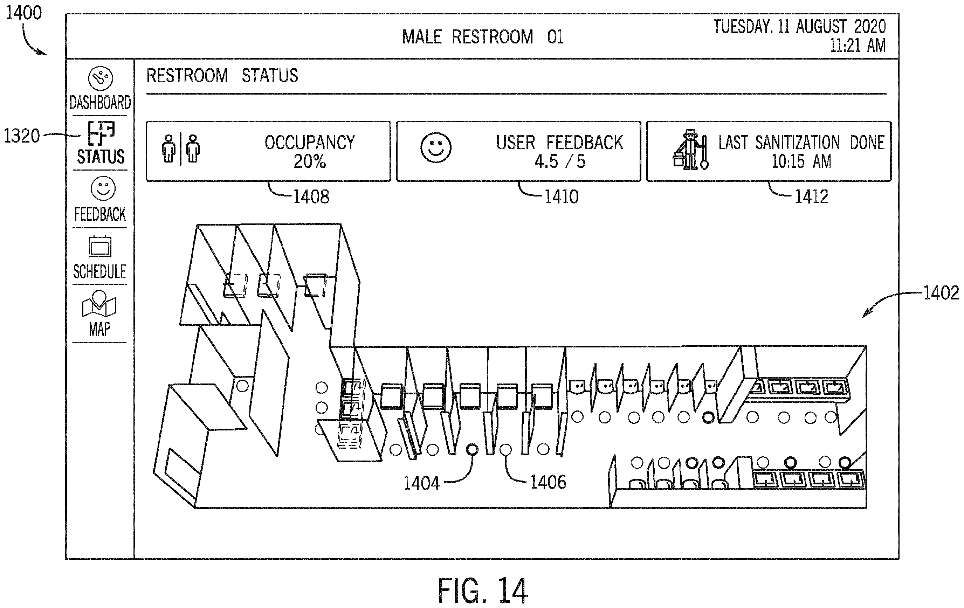

Referring now to FIG. 14, status view 1400 is shown, according to an exemplary embodiment. Status view 1400 may present a space status to a user before the user enters the space. For example, status view 1400 may display a bathroom status and/or the status associated with one or more devices in the bathroom to a user. Status view 1400 may include model 1402. Model 1402 may be a 3-dimensional rendering of the space. For example, model 1402 may be a model of a bathroom. In various embodiments, model 1402 depicts a floorplan layout of a space. Model 1402 may include one or more indicators. For example, each indicator may be positioned next to a device and/or space and display the status of the device and/or space. For example, first indicator 1404 may indicate that a bathroom stall is occupied while second indicator 1406 may indicate that a bathroom stall is unoccupied. In some embodiments, first and second indicators 1404 and 1406 may indicate a functionality status of a device. For example, first indicator 1404 may be used to indicate a device is currently non-functional (or has a fault), while second indicator 1406 may be used to indicate a device is currently in good working order. In various embodiments, first indicator 1404 has a red color. In various embodiments, second indicator 1406 has a green color. Status view 1400 may include one or more status panels displaying key parameters. For example, status view 1400 may include occupancy panel 1408, user feedback panel 1410, and/or sanitization panel 1412.

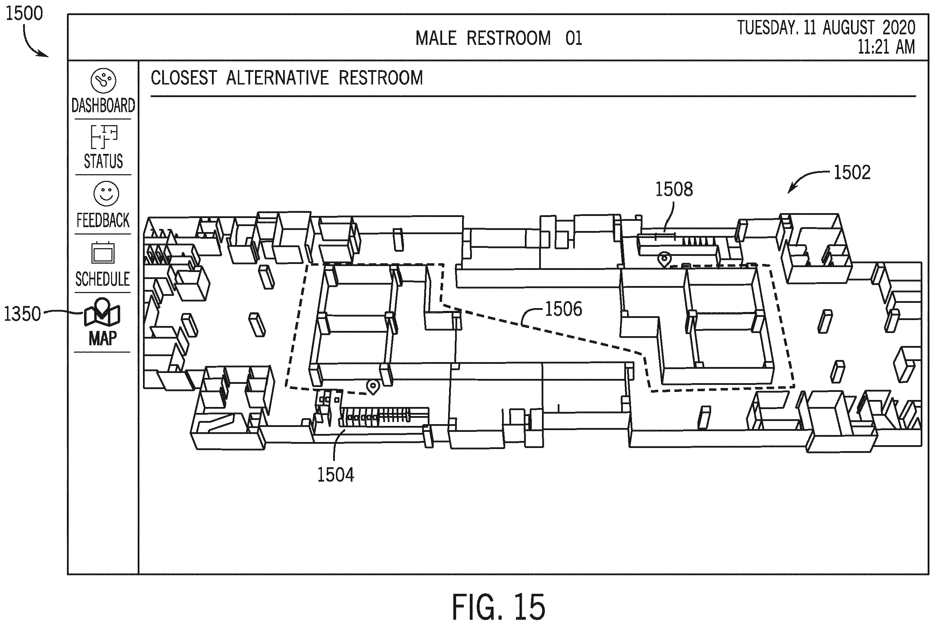

Referring now to FIG. 15, map view 1500 is shown, according to an exemplary embodiment. Map view 1500 may be used by a user to find a nearby restroom. For example, map view 1500 may be displayed via a mobile device application and may facilitate identifying and guiding a user to a bathroom based on the location of the user. As an additional example, map view 1500 may be displayed on a kiosk outside a bathroom that is being cleaned to facilitate users that show up to the bathroom to locate an alternate bathroom. In some embodiments, map view 1500 facilitates reducing an occupancy in one specific bathroom by helping users find less crowded bathrooms nearby. Additionally or alternatively, if a bathroom is low on supplies a user may use map view 1500 to locate a bathroom with stocked supplies. Map view 1500 is shown to include map 1502. Map 1502 may include current location 1504, route 1506, and alternative destination 1508. Current location 1504 may be a location associated with a user. Current location 1504 may be determined based on a location of the device presenting map view 1500 (e.g., a location of a kiosk, based on a mobile device GPS, etc.). Additionally or alternatively, a user may specify current location 1504. Route 1506 may guide a user to alternative destination 1508. In various embodiments, route 1506 is calculated as the most time efficient route to alternative destination 1508. In some embodiments, map view 1500 displays multiple routes 1506. Alternative destination 1508 may be an alternative to the space the user is looking for. In some embodiments, alternative destination 1508 is determined based on one or more parameters (e.g., supply levels, cleaning in progress, occupancy, cleanliness, etc.). In some embodiments, map view 1500 displays multiple alternative destinations 1508 and/or allows users to select alternative destination 1508. In various embodiments, alternative destination 1508 is a bathroom location.

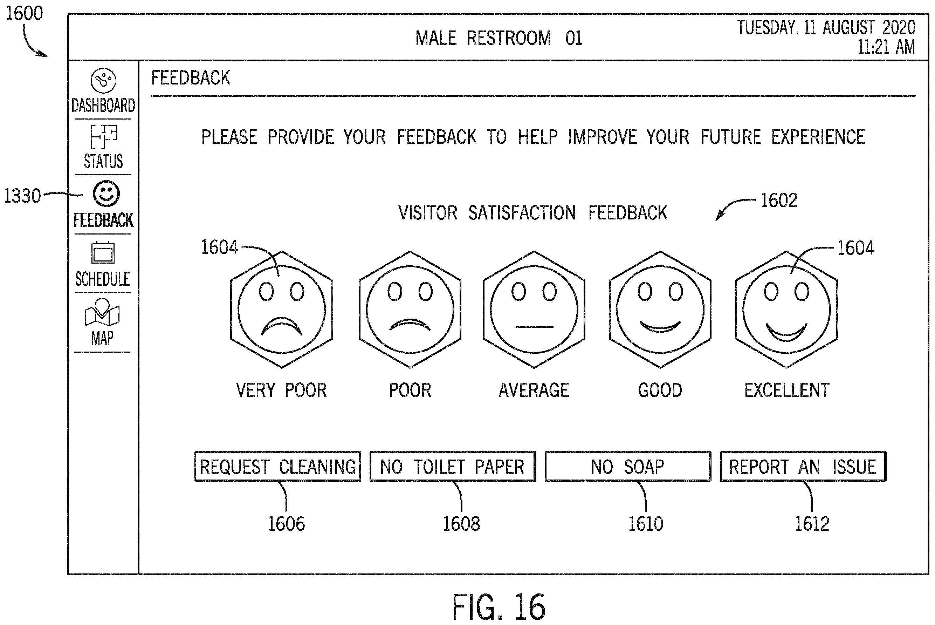

Referring now to FIG. 16, feedback view 1600 is shown, according to an exemplary embodiment. Feedback view 1600 may facilitate receiving feedback from users. For example, users may provide feedback following usage of a bathroom using a mobile application or kiosk. Feedback view 1600 is shown to include feedback panel 1602. Feedback panel 1602 may include a number of selections 1604 corresponding to different levels of satisfaction. In various embodiments, selections 1604 have different colors. For example, a selection 1604 corresponding to "excellent" may have a green color and a selection 1604 corresponding to "very poor" may have a color of red. Feedback from feedback view 1600 may be receiving by a computing system of the present disclosure and used to trigger one or more events. For example, analytics system 810 may receive feedback and generate a cleaning ticket associated with a bathroom in response. Feedback view 1600 is shown to include a number of options 1606-1612. Options 1606-1612 may correspond to one or more issues associated with a space such as a bathroom. For example, options 1606-1612 may include a "request cleaning" option, a "no toilet paper" option, a "no soap" option, and/or a "report issue" option. In various embodiments, selection of one or more of options 1601-1612 cause an indication to be sent to a building manager, facility manager, and/or a computing system.

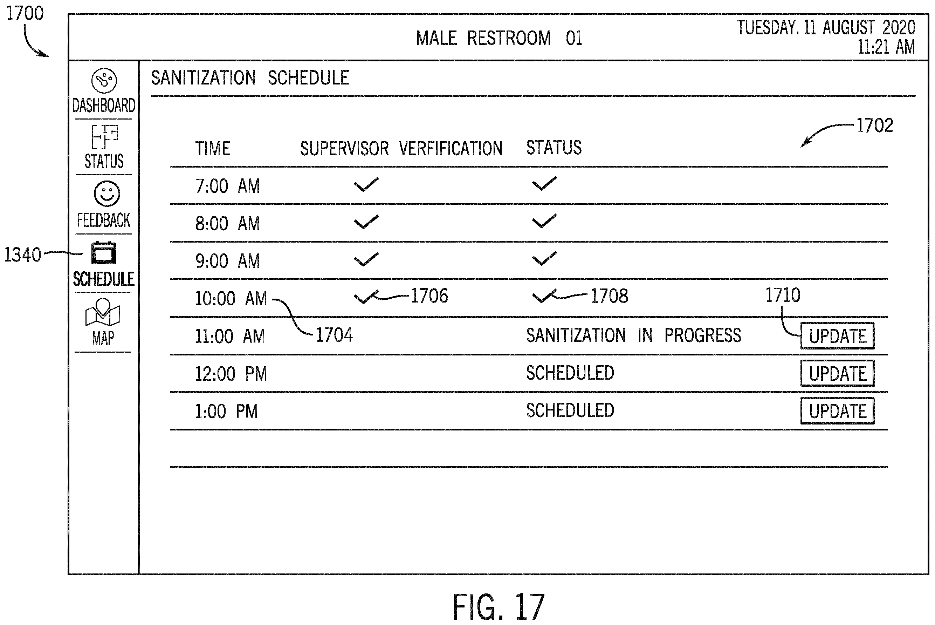

Referring now to FIG. 17, schedule view 1700 is shown, according to an exemplary embodiment. Schedule view 1700 may facilitate viewing and confirming cleaning statuses associated with devices and/or spaces. For example, a facility maintenance staff may interact with schedule view 1700 using an interactive tablet application that facilitates viewing and confirming the status of various cleaning tasks associated with a bathroom. Schedule view 1700 is shown to include list 1702. List 1702 may include a workflow to facilitate managing the cleaning of one or more spaces. List 1702 may include a schedule based on the current day. In various embodiments, list 1702 facilitates manager review of completed tasks. In some embodiments, list 1702 receives user input to update a cleaning status associated with a cleaning activity. For example, a user may confirm completion of a cleaning activity and schedule view 1700 may automatically fill in a time and date associated with status update. List 1702 may include time 1704, verification 1706, status 1708, and/or update option 1710. In some embodiments, selection of a cleaning activity within list 1702 may display detailed information associated with the cleaning activity such as a step-by-step guide on how to complete the cleaning activity.

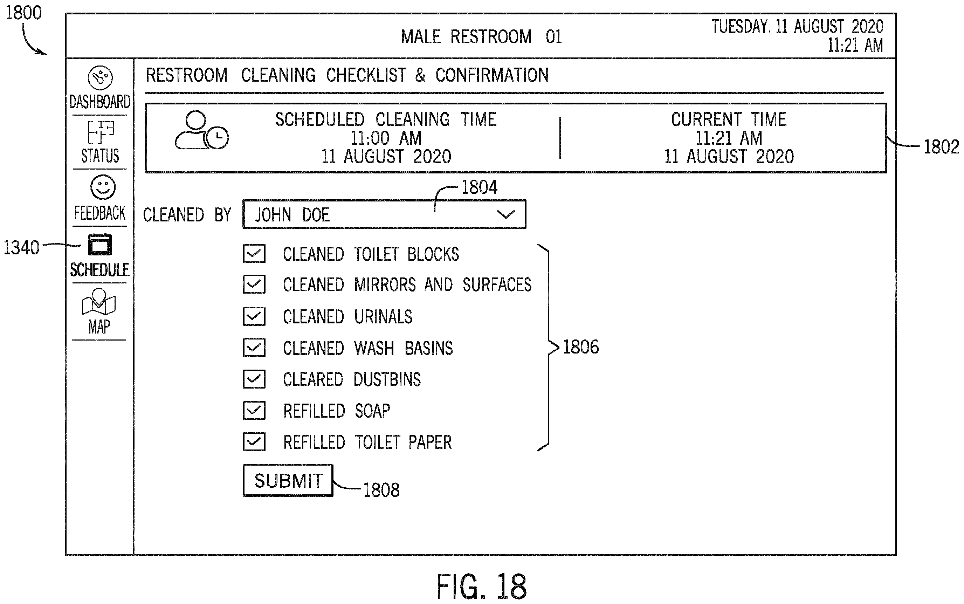

Referring now to FIG. 18, second schedule view 1800 is shown, according to an exemplary embodiment. Second schedule view 1800 may facilitate confirming cleaning activities by staff. In various embodiments, selection of update option 1710 causes second schedule view 1800 to be displayed (e.g., to update one or more cleaning activities, etc.). In various embodiments, users may update a cleaning activity with information such as an identity of the user that performed the cleaning, a confirmation of actions associated with the cleaning activity, a time of completion, and/or the like. Information panel 1802 may automatically display the time of completion associated with a cleaning activity. Selection element 1804 may facilitate a user to select the identity of the individual who performed the cleaning activity. Options 1806 may facilitate confirming that one or more steps associated with a cleaning activity were completed. In various embodiments, options 1806 differ depending on the cleaning activity. Submit option 1808 facilitates updating the cleaning activity record. In various embodiments, selection of submit option 1808 causes data to be stored in a database. For example, analytics system 810 may update a cleaning record.

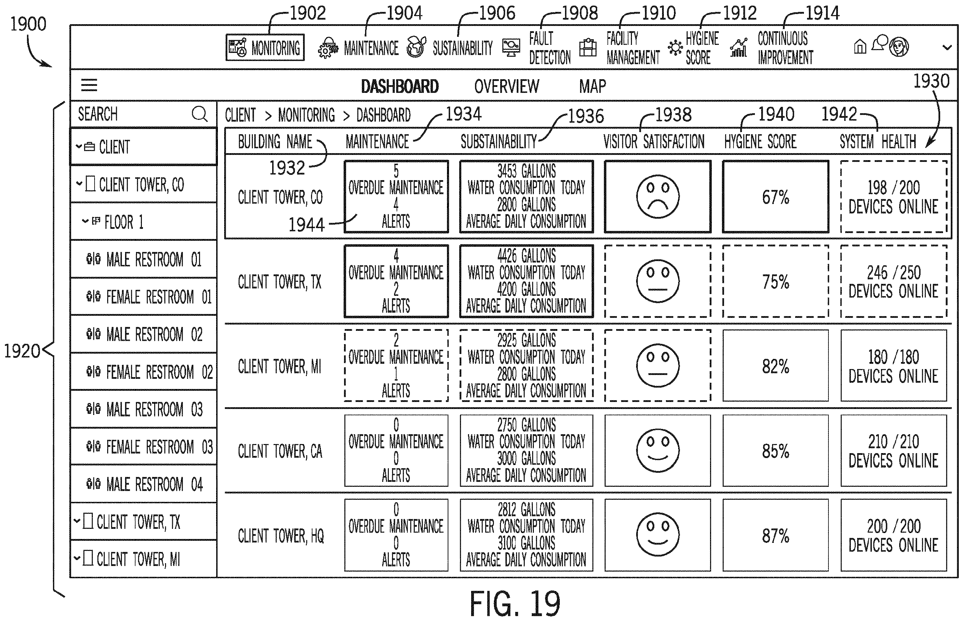

Referring now to FIGS. 19-33, a number of UIs for monitoring and/or managing one or more devices and/or space is shown, according to an exemplary embodiment. In various embodiments, the UIs may be used by individual such as portfolio owners or building mangers to operate one or more buildings. Referring now specifically to FIG. 19, monitoring view 1900 is shown, according to an exemplary embodiment. Monitoring view 1900 may include a number of widgets associated with a building for monitoring performance parameters associated with the building. Monitoring view 1900 may include panels 1902-1914 associated with various functionalities. Selection of each of panels 1902-1914 may cause a new UI to be displayed. For example, panels 1902-1914 may include a monitoring panel, a maintenance panel, a sustainability panel, a fault detection panel, a facility management panel, a hygiene score panel, a continuous improvement panel, and/or the like. Monitoring view 1900 may include space selection 1920. Space selection 1920 may facilitate selecting a specific space to view and manage parameters associated with the space. For example, a user may select a building using space selection 1920. Additionally or alternatively, a user may select a bathroom within a building using space selection 1920. In some embodiments, space selection 1920 is populated based on a graph data structure. Monitoring view 1900 may include dashboard 1930. Dashboard 1930 may include a number of parameter associated with the selected space. In various embodiments, dashboard 1930 displays information such as building name 1932, maintenance information 1934, sustainability information 1936, visitor satisfaction 1938, hygiene score 1940, and/or system health 1942.

In various embodiments, a default view of monitoring view 1900 displays only exception items to the user to avoid information fatigue. Maintenance information 1934 may display a number of overdue maintenance issues and/or a number of devices that are currently non-functional associated with a space. Sustainability information 1936 may display a consumption data such as a daily water consumption. In some embodiments, sustainability information 1936 displays the consumption data compared against a baseline. Visitor satisfaction 1938 may display an aggregate satisfaction score associated with a space. For example, users may submit feedback using feedback view 1600 and visitor satisfaction 1938 may aggregate the user feedback to display an aggregate feedback score associated with a space. Hygiene score 1940 may display a calculated score based on cleanliness feedback and/or sanitization completed compared to usage. For example, hygiene score 1940 may display a high score if a bathroom is cleaned every day but only used once a week by a single individual and consistently receives high cleanliness feedback from the single individual. System health 1942 may display a number of connected devices (e.g., device 430, etc.) and/or how many of the devices are regularly communicating with the system. In various embodiments, one or more parameters within dashboard 1930 include status indicator 1944. Status indicator 1944 may quickly and easily display a status of the associated parameter at a glance. For example, status indicator 1944 may be a colored boarder around the parameter to indicate a status of the parameter. As an additional example, each parameter may include a status indicator 1944 of red, orange, or green based on the performance of the parameter. Red may indicate a need for attention. Orange may indicate a borderline. Green may indicate a satisfactory parameter. In various embodiments, status indicator 1944 are generated in response to comparing the parameter (e.g., maintenance information 1934, a hygiene score, a user satisfaction level, etc.) to a threshold. For example, status indicator 1944 may display a red border in response to determining a hygiene score is below a threshold associated with the space.

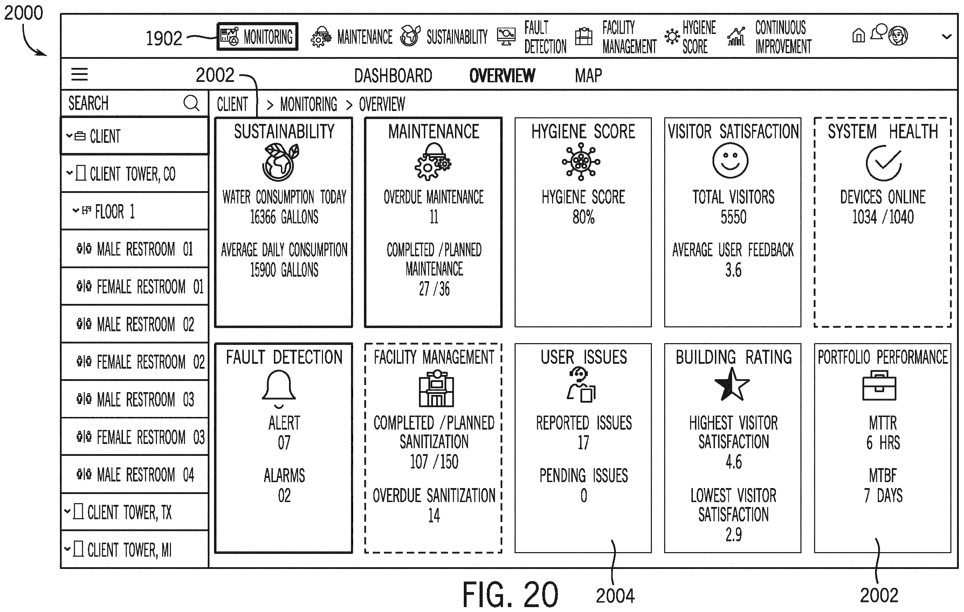

Referring now to FIG. 20, second monitoring view 2000 is shown, according to an exemplary embodiment. In various embodiments, second monitoring view 2000 displays similar and/or the same information as monitoring view 1900. Second monitoring view 2000 may include tiles 2002. Tiles 2002 may display aggregate information associated with a space. For example, tiles 2002 may display aggregate information associated with a number of buildings in a portfolio. Tiles 2002 may display information related to a variety of parameters including sustainability, maintenance, hygiene score, visitor satisfaction, system health, fault detection, facility management, user issues, building rating, and/or portfolio performance. Similarly as described above in relation to status indicator 1944, each of tiles 2002 may have status indicator 2004 associated. Status indicator 2004 may be a color border around each of tiles 2002 to indicate a status associated with the parameter. For example, a red border status indicator 2004 may be used to indicate a hygiene score is below a threshold. As an additional example, a green border status indicator 2004 may be used to indicate an aggregate visitor satisfaction rating is above a threshold. Such color coding or other graphical indicators provide a dynamic visualization and prioritization of timeseries data and system-derived insights from any of the embodiments described herein. In addition or in the alternative, the tiles 2002 may be arranged in a particular order. The tiles may be arranged from left to right according to hygiene score. The tiles may be arranged according to the status indicator 2004 (e.g., red status, then yellow status, and then green status).

In various embodiments, tiles 2002 may include a facility management tile displaying a summary of sanitation activities associated with the space. The facility management tile may display a number of overdue sanitation activities. In various embodiments, tiles 2002 may include a building rating tile displaying a best and/or worst rating space (e.g., a restroom, etc.). In various embodiments, tiles 2002 may include a portfolio performance tile displaying how often devices fail and/or how fast they are fixed. In various embodiments, tiles 2002 may include a fault detection tile displaying alerts. For example, the fault detection tile may display alerts or issues that affect efficiency and/or functionality of a space. In various embodiments, the fault detection tile displays alarms that cause a device and/or space to be non-functional.

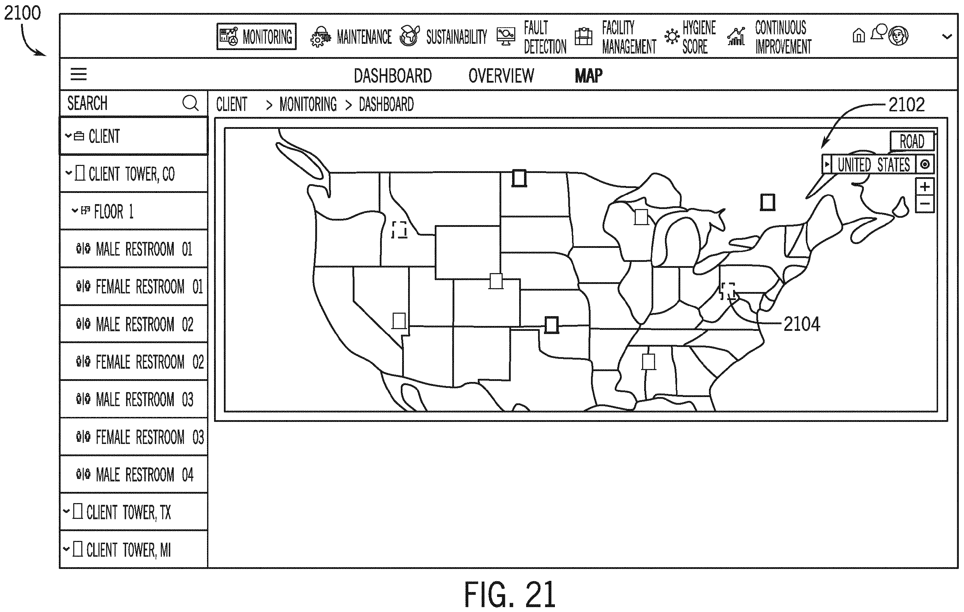

Referring now to FIG. 21, map view 2100 is shown, according to an exemplary embodiment. Map view 2100 may display one or more spaces 2104 on map 2102. Spaces 2104 may correspond to buildings within a portfolio. In various embodiments, spaces 2104 are color-coded to identify a status of the space. For example, a building having a large number of unaddressed alarms may display as a red color, a building having a number of unaddressed alarms in a medium range may display as an orange color, and a building having below a threshold number of unaddressed alarms may display as a green color. In various embodiments, multiple spaces (e.g., buildings, etc.) in close proximity to each other may be grouped to be displayed as a single space. In various embodiments, map 2102 may adjust in size to display each of the associated spaces. In various embodiments, map view 2100 may facilitate quickly and efficiently identifying and/or selecting one or more spaces. For example, a user may select a space using map view 2100 and then view information associated with the selected space using monitoring view 1900.

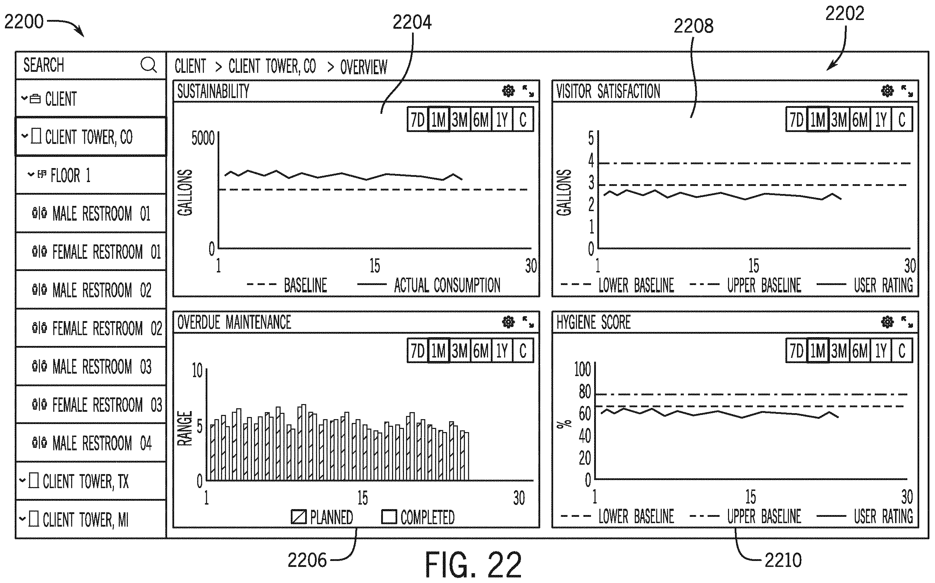

Referring now to FIG. 22, trend analysis view 2200 is shown, according to an exemplary embodiment. Trend analysis view 2200 may display data trends associated with one or more metrics. In various embodiments, trend analysis view 2200 displays data trends for a specified time period (e.g., 30 days, etc.). Trend analysis view 2200 may include trend dashboard 2202. Trend dashboard 2202 may display graphs and/or other figures displaying trend data. Trend dashboard 2202 may include sustainability graph 2204, overdue maintenance graph 2206, visitor satisfaction graph 2208, and/or hygiene score graph 2210. Each of the graphs may include time selection options that facilitate selecting one or more time periods associated with each of the graphs. Sustainability graph 2204 may display consumption data (e.g., water consumption, etc.) over time. Overdue maintenance graph 2206 may display planned and/or completed maintenance issues over time. Visitor satisfaction graph 2208 may display visitor satisfaction scores over time. Hygiene score graph 2210 may display hygiene scores over time.

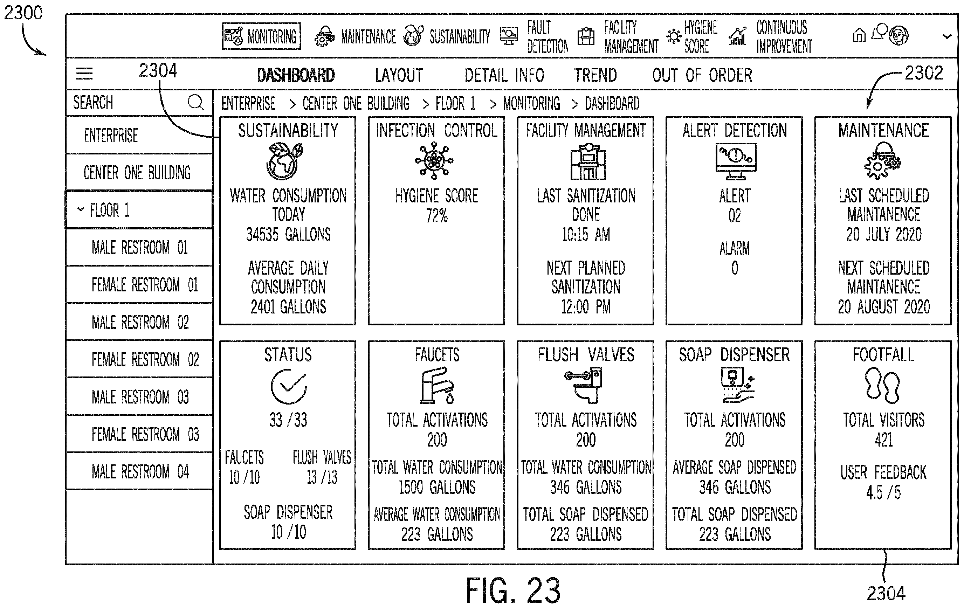

Referring now to FIG. 23, third monitoring view 2300 is shown, according to an exemplary embodiment. Similarly to monitoring view 1900 described above, third monitoring view 2300 may include a number of widgets associated with a building for monitoring performance parameters associated with the building. In various embodiments, third monitoring view 2300 is associated with a specific space. For example, third monitoring view 2300 may be associated with a specific space within a building such as a bathroom. Third monitoring view 2300 may include dashboard 2302 having tiles 2304. Tiles 2304 may display information associated with a space. For example, tiles 2304 may display aggregate information associated with a number of bathrooms in a building. Tiles 2304 may display information related to a variety of parameters including sustainability, infection control, facility management, alert detection, maintenance, status, faucets, flush valves, soap dispensers, and/or footfall.

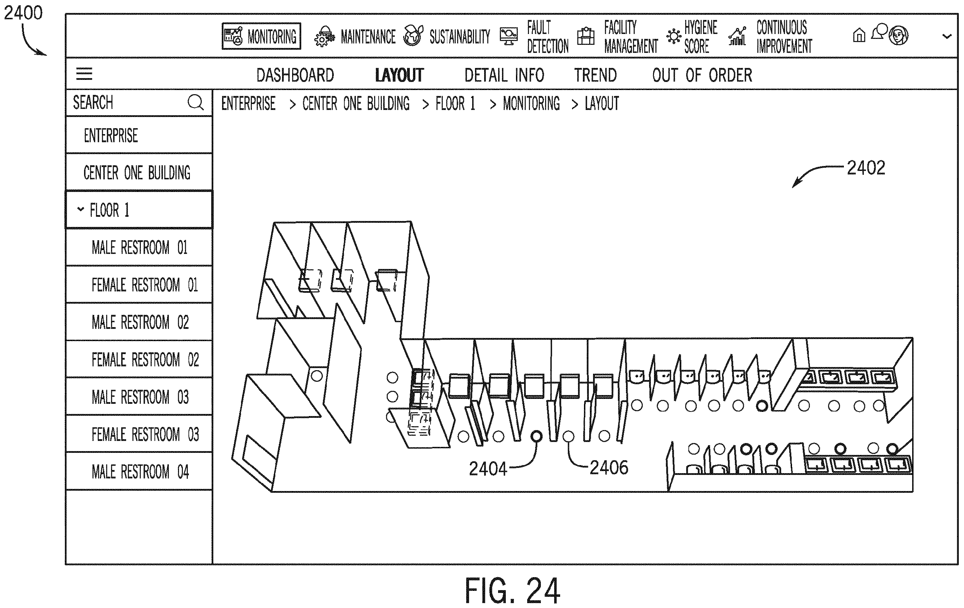

Referring now to FIG. 24, floorplan view 2400 is shown. Floorplan view 2400 may display floorplan 2402 associated with a selected space. For example, a user may select a bathroom and floorplan view 2400 may display a floorplan 2402 of the bathroom. In various embodiments, floorplan 2402 displays a status associated with one or more devices and/or spaces within the space. For example, first status indicator 2404 may be used to indicate a bathroom stall is currently available while second status indicator 2406 may be used to indicate a bathroom stall is unavailable. In various embodiments, first and second status indicators 2404 and 2406 may indicate an operation status of a device such as devices 430. In some embodiments, first status indicator 2404 is a green color. In some embodiments, second status indicator 2406 is a red color. Floorplan view 2400 may retrieve device status information from a database to generate floorplan 2402.

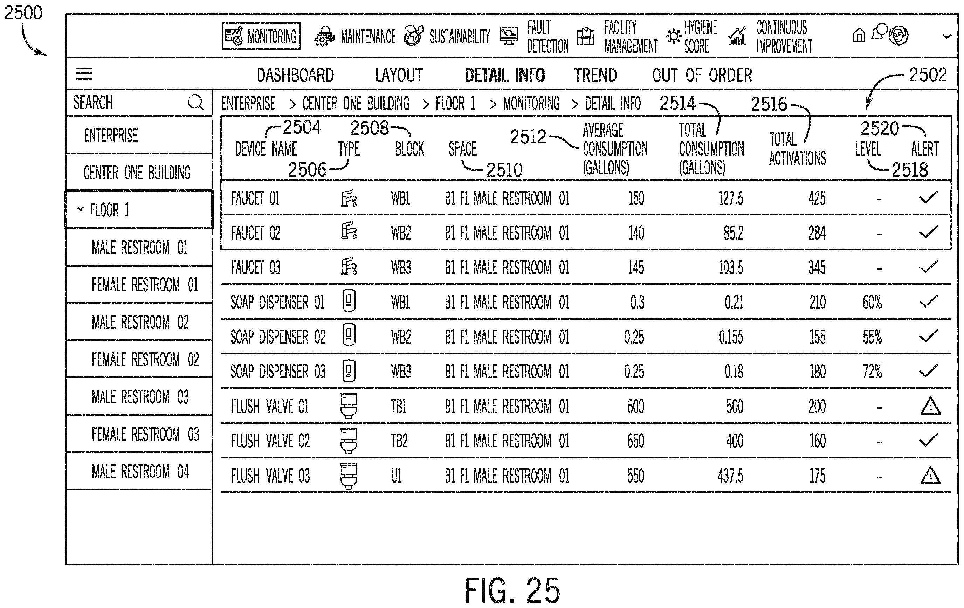

Referring now to FIG. 25, list view 2500 is shown, according to an exemplary embodiment. List view 2500 may display various parameters associated with devices and/or spaces within a space. For example, list view 2500 may display operational parameters associated with one or more devices 430 within a bathroom. List view 2500 is shown to include list 2502. List 2502 may display one or more devices within a selected space. List 2502 may display various information associated with each device such as device name 2504, device type 2506, device block 2508, device space 2510, average consumption 2512 (e.g., water consumption in gallons, etc.), total consumption 2514 (e.g., water consumption in gallons, etc.), total activations 2516, level 2518, and/or alert 2520. In various embodiments, level 2518 displays a battery level associated with the device. Alert 2520 may display an alert status associated with the device. For example, alert 2520 may display a green check mark if a device is in proper working order and may display a red exclamation point if the device has an alarm.

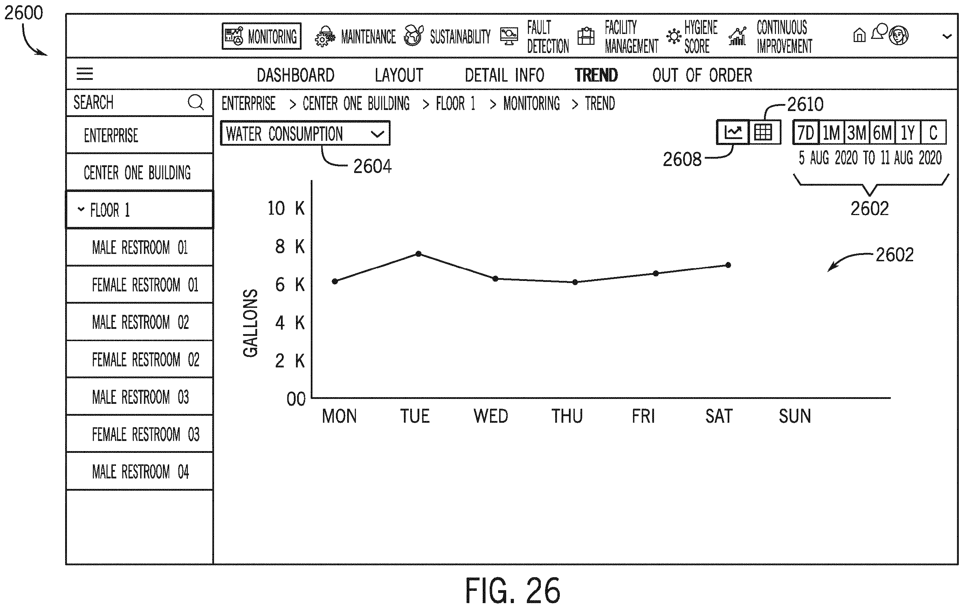

Referring now to FIG. 26, trend view 2600 is shown, according to an exemplary embodiment. Trend view 2600 may facilitate monitoring trends associated with individual devices and/or spaces. For example, trend view 2600 may display trend data associated with a specific faucet. Trend view 2600 is shown to include graph 2602. Graph 2602 may display parameter data associated with the specific device and/or space over time. In various embodiments, a specific time period may be selected using selections 2606. In various embodiments, trend view 2600 includes parameter selection 2604 that may facilitate selecting the specific parameter for display. For example, water consumption associated with a faucet may be displayed. In various embodiments, trend view 2600 includes first display option 2608 and second display option 2610 which may be configured to display the parameter data in different forms. For example, the parameter data may be displayed as a graph or as a table.

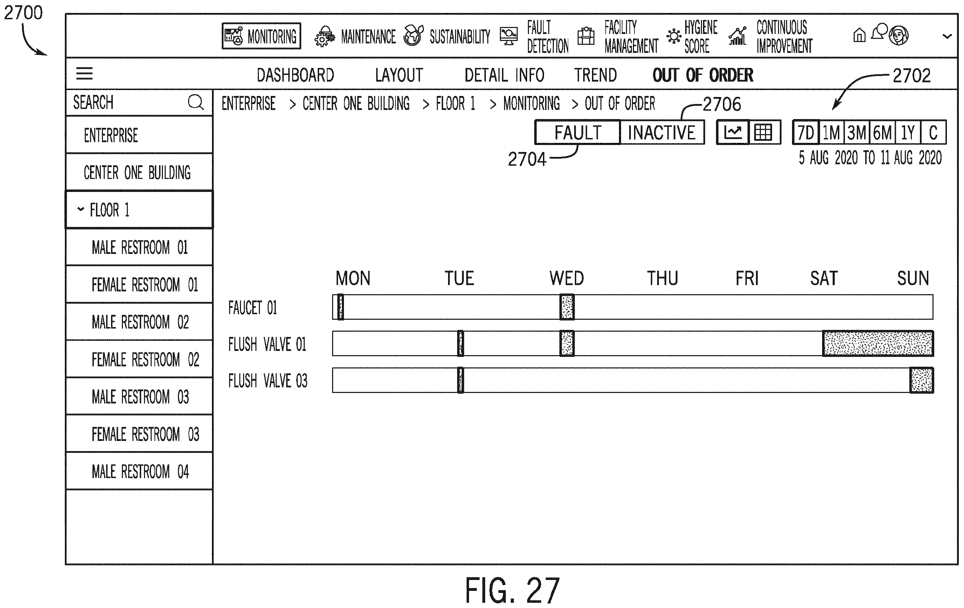

Referring now to FIG. 27, out of order view 2700 is shown, according to an exemplary embodiment. Out of order view 2700 may facilitate displaying time periods for which a device and/or space was out of order. For example, out of order view 2700 may display a timeline and may include a colored portion on the timeline corresponding to a period of time for which a device was out of order. In various embodiments, out of order view 2700 display a frequency and/or duration of each out of order event. In various embodiments, out of order view 2700 includes timeline 2702. Timeline 2702 may display a status of a device over a selectable time period. In various embodiments, timeline 2702 includes fault selection 2704 and inactive selection 2706. Fault selection 2704 may display fault status information on timeline 2702. Inactive selection 2706 may display inactive alarms status on timeline 2702. In some embodiments, fault selection 2704 and/or inactive selection 2706 correspond to different colors on timeline 2702 (e.g., to facilitate overlay comparisons, etc.).

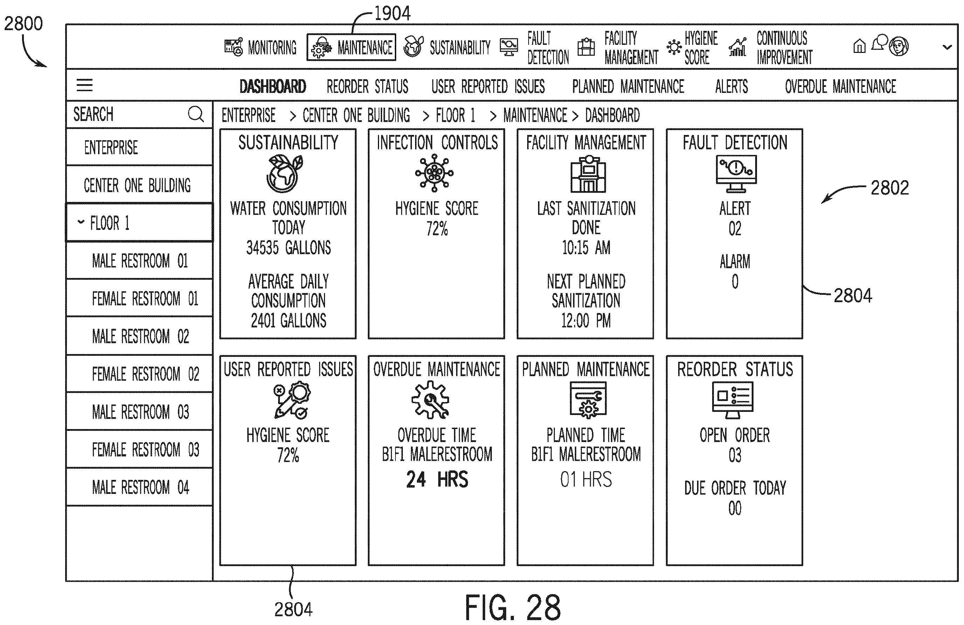

Referring now to FIG. 28, maintenance view 2800 is shown, according to an exemplary embodiment. In various embodiments, maintenance view 2800 displays maintenance information associated with specific devices and/or spaces. For example, maintenance view 2800 may display maintenance parameters associated with a specific bathroom. Maintenance view 2800 may include dashboard 2802 having one or more tiles 2804. Tiles 2804 may display information associated with a devices and/or spaces (e.g., a bathroom, etc.). For example, tiles 2804 may display aggregate information associated with a single bathroom. Tiles 2804 may display information related to a variety of parameters including sustainability, infection controls, facility management, fault detection, user reported issues, overdue maintenance, planned maintenance, and/or reorder status. In various embodiments, one or more of tiles 2804 include colors to indicate status and/or priority. For example, overdue maintenance may be displayed in red and planned maintenance. In some embodiments, tiles 2804 include a tile displaying reorder status information associated with one or more consumables in a space (e.g., toilet paper, paper towel, etc.).

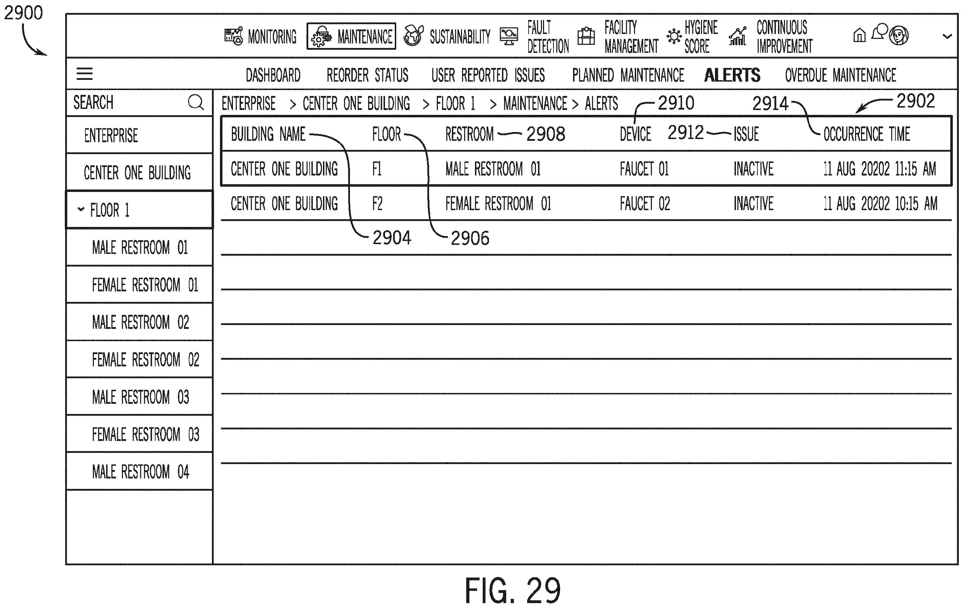

Referring now to FIG. 29, maintenance list view 2900 is shown, according to an exemplary embodiment. Maintenance list view 2900 may display various maintenance parameters associated with devices and/or spaces within a space. For example, maintenance list view 2900 may display scheduled and/or completed maintenance associated with one or more devices 430 within a bathroom. Maintenance list view 2900 is shown to include list 2902. List 2902 may display maintenance items associated with one or more devices within a selected space. List 2902 may display various information associated with the maintenance such as a building name 2904 (e.g., building where the maintenance occurs, etc.), floor 2906, space 2908, device 2910, issue 2912, and/or occurrence time 2914. Issue 2912 may include an alarm code.

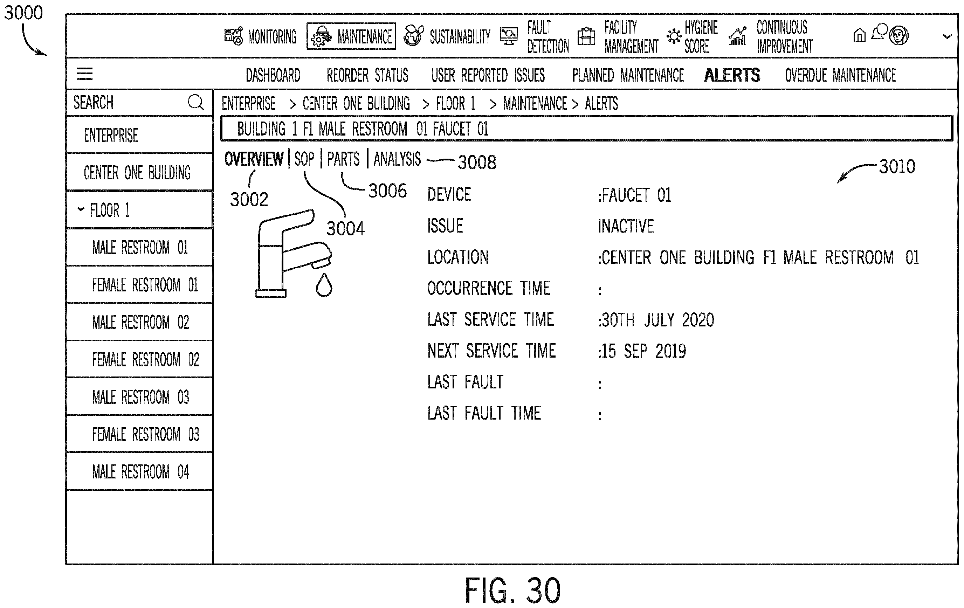

Referring now to FIG. 30, alert view 3000 is shown, according to an exemplary embodiment. Alert view 3000 may display one or more alerts associated with a device and/or space. For example, alert view 3000 may display alert information associated with a faucet such as an alert type, an occurrence time, a last service time, a next service time, a last fault time, a last fault type, and/or the like. In some embodiments, alert view 3000 displays product information associated with a device such as a device name, a device status, a device location, and/or the like. Alert view 3000 may include a number of panels such as overview 3002, standard operating procedures (SOP) 3004, parts 3006, and analysis 3008. Overview 3002 may include information panel 3010 listing various information associated with the device and/or associated alarm/alert. SOP 3004 may display one or more SOPs associated with the device. Parts 3006 may display one or more parts associated with a device (e.g., the part location, availability, one-click ordering, etc.). Analysis 3008 may display root cause analysis information and/or the like. For example, analysis 3008 may display analysis information generated by analytics system 810 as described above.

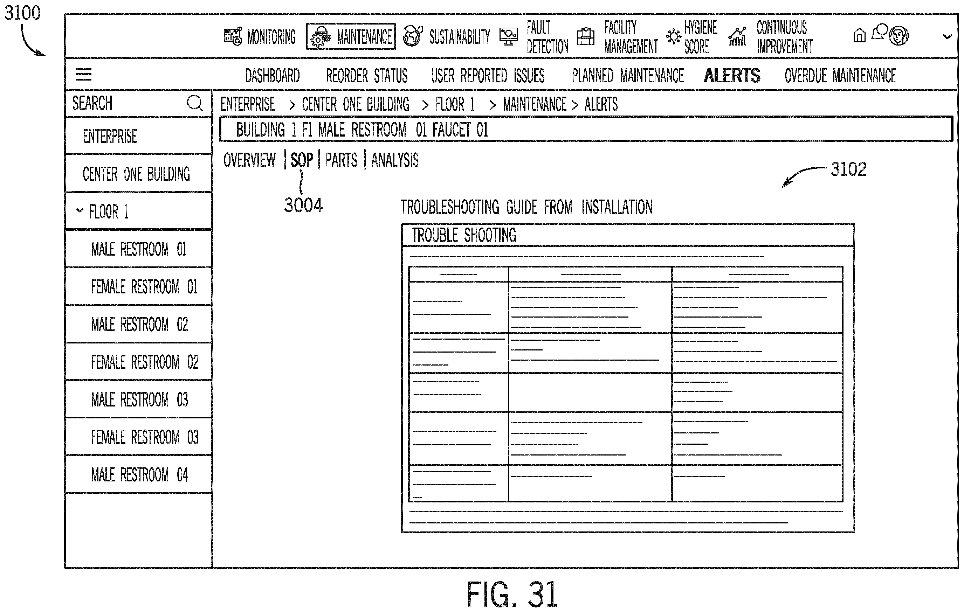

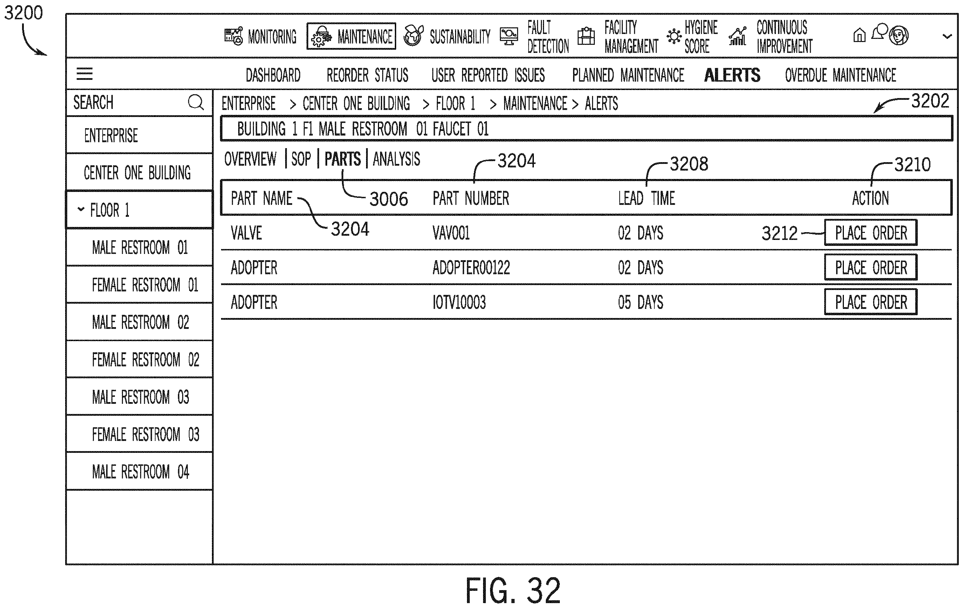

Referring now to FIG. 31, SOP view 3100 is shown, according to an exemplary embodiment. In various embodiments, SOP view 3100 is displayed in response to selecting SOP 3004 on alert view 3000. SOP view 3100 may display standard operating procedures associated with a device. In some embodiments, the SOPs are user defined. In some embodiments, the SOPs are pulled from a manufacturer system (e.g., a manufacturer website, etc.). SOP view 3100 may include SOP display 3102. In some embodiments, SOP display 3102 displays a user manual associated with a device. For example, SOP display 3102 may display a user manual navigated to a troubleshooting section. Referring now to FIG. 32, parts view 3200 is shown, according to an exemplary embodiment. In various embodiments, parts view 3200 is displayed in response to selecting parts 3006 on alert view 3000. Parts view 3200 may display one or more parts associated with a device. Parts view 3200 may include parts list 3202 displaying one or more parts associated with a device. Parts list 3202 may display various information associated with each part such as part name 3204, part number 3204, lead time 3208, and/or action 3210. In various embodiments, lead time 3208 displays a time it takes to receive a shipment of a part. Lead time 3208 may be calculated based on historical data. Action 3210 may include order option 3212. Order option 3212 may facilitate one-click ordering of a part. For example, a user may select order option 3212 and analytics system 810 may automatically order the part from a known supplier.

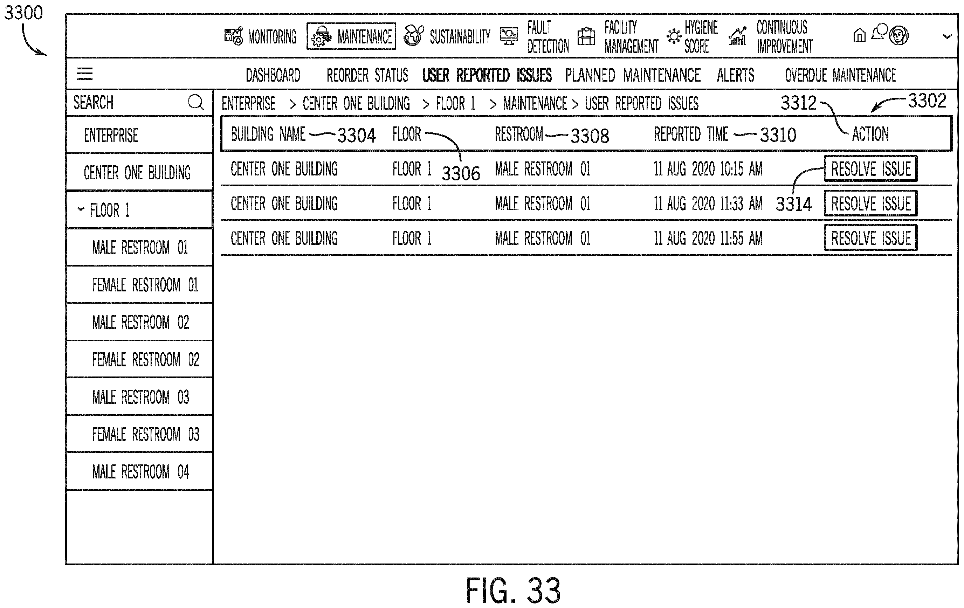

Referring now to FIG. 33, user reported issues view 3300 is shown, according to an exemplary embodiment. User reported issues view 3300 may display various user reported issues (e.g., maintenance issues, facility management issues, low supplies, etc.) associated with devices and/or spaces within a space. For example, user reported issues view 3300 may display "no toilet paper" feedback generated as discussed above with reference to FIG. 16. User reported issues view 3300 is shown to include list 3302. List 3302 may display user reported issues associated with one or more devices and/or spaces (e.g., a broken faucet, an unsanitary bathroom, etc.). List 3302 may display various information associated with the issues such as a building name 3304 (e.g., building where the issue occurs, etc.), floor 3306, space 3308, reported time 3310, and/or action 3312. In various embodiments, actions 3312 includes resolve issue 3314 which may mark the issue as resolved. For example, a facility maintenance personnel may select resolve issue 3314 after supplying extra toilet paper to a bathroom in response to a "no toilet paper" feedback issue.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the cord management system as shown in the various exemplary embodiments is illustrative only. Additionally, any element disclosed in one embodiment may be incorporated or utilized with any other embodiment disclosed herein. Although only one example of an element from one embodiment that can be incorporated or utilized in another embodiment has been described above, it should be appreciated that other elements of the various embodiments may be incorporated or utilized with any of the other embodiments disclosed herein.

## Claims

**1.** An apparatus for real time correlation of bathroom assets for maintenance requirements, the apparatus comprising:

at least one flow sensor configured to generate water usage data for a bathroom device;
at least one presence sensor configured to generate user presence data for a room including the bathroom device; and
a controller configured to analyze the usage data and the user presence data to generate a maintenance message in response to the analysis.

**2.** The apparatus of claim 1, wherein one or more of the following applies:

(i) the maintenance message includes dispatch information for maintenance personnel;
(ii) the maintenance message is broadcast to a plurality of devices;
(iii) the maintenance message includes diagnostic information;
(iv) the maintenance message includes a part number for a consumable or a replaceable component;
(v) the maintenance message includes a preventative action; and
(vi) the maintenance message includes a cleaning request.

**3.** The apparatus of claim 1 or claim 2, wherein the at least one flow sensor detects an electronically controlled valve or a water flow through the electronically controlled valve.

**4.** The apparatus of claim 1, claim 2 or claim 3, wherein the at least one presence sensor detects motion in the room.

**5.** The apparatus of any one of the preceding claims, further comprising:
a display configured to provide an identifier for the room or the bathroom device in associated with the maintenance message in response to the analysis.

**6.** An apparatus for monitoring hygiene in a bathroom, the apparatus comprising:

at least one flow sensor configured to generate usage data for the bathroom;
at least one user sensor configured to generate user hygiene data based on use activities in the bathroom; and
a controller configured to analyze the usage data and the hygiene data to calculate a hygiene score for the bathroom.

7. The apparatus of claim 6, wherein the controller is configured to compare the hygiene score to a threshold.

8. The apparatus of claim 7, wherein the controller is configured to generate a maintenance message in response to the hygiene score.

9. The apparatus of claim 6, claim 7 or claim 8, wherein the hygiene score is calculated at a predetermined time interval.

10. The apparatus of any one of claims 6 to 9, wherein the hygiene score is a first hygiene score at the bathroom is a first bathroom, wherein the controller receives at least one second hygiene score associated with a second bathroom and calculates a composite score based on the first hygiene score and the second hygiene score.

11. The apparatus of any one of claims 6 to 10, wherein at least one flow sensor configured to generate usage data for the bathroom includes a first flow sensor for a toilet and a second flow sensor for a faucet.

12. A method for real time correlation of bathroom assets for maintenance requirements, the method comprising:

receiving water usage data for a bathroom device from at least one flow sensor;
receiving user presence data for a vicinity of the bathroom device from at least one presence sensor;
analyzing the usage data and the user presence data; and
generating a maintenance message in response to the analysis.

13. The method of claim 12, further comprising:
displaying the maintenance message and at least one identifier for the bathroom device.

14. The method of claim 12 or claim 13, wherein the maintenance message includes a command for the bathroom device.

15. The method of claim 12, claim 13 or claim 14, wherein the command for the bathroom device includes a calibration command, a reboot command, or a shutoff command.

10
106
108
12
102
12
112
12
112
112
104
100

FIG. 1

12
260
218
214
212
216
210
230
240
270
250
220
280
222
212
216
222
220
224
280

FIG. 2

112
310
310
330a
330b
330c
300
324
322
12
FIG. 3

400
490
App Layer
Rest API
480
Data Platfrom
470
Network
https/MQTT
BMS
Bacnet/IP
Gateway
450
460
440
Bacnet/IP
Controller
430
408
410
402
404
406
Devices
412
414
Faucets
Soap/Alcohol Dispensers
Hand Dryers
Flushing Systems
Towel Dispenser
Water Dispenser
Cleaning System
Disinfectant Systems
Lighting
Leak Detection
Blockage Detection
Occupancy Sensor
Activity Sensing
Door Lock/Unlocking
428
426
424
422
420
418
416


FIG. 4

Data Platform
480
520
Analytics
522
Alarms
Events
524
ML Engine
/Modeling
526
Fault
Detection and
Diagnostics
528
Rules Engine
530
Knowledge
Graph
532
Historical Data
Analytics
540
Processing
Engines
542
Cache/Instant
Storage
544
Storage
NoSQL/SQL
546
Metadata
548
Security
550
Notifications
552
Processing
Streams
560
IOT
Management
562
IOT Hub
C2D / D2C
Messages
564
Event Hub
Stream data
566
COV
Processing
568
Telemetry/
Sensor Data
570
Device
Management

FIG. 5

490
602
Intelligent Restroom
Intelligent Kitchen
604
Intelligent Clean Room
606
610
Maintenance
620
Facility Management
630
Sustainability
640
Leak Detection
650
Infection Control
660
Application

FIG. 6

700
720
Weather Service
Weather Data
730
News Service
News
460
BMS
Documents
740
Document Service
750
Media Service
Media
Network
470
IOT gateway
450
BLE Router
710
10
Device
430


FIG. 7

810
Analytics System
820
Processing Circuit
840
Processor
850
Memory
852
Event Circuit
854
Rules Engine
856
Machine Learning Circuit
858
Analysis Circuit
860
Fault Detection and Diagnostic Circuit
862
User Interface Circuit
830
Knowledge Graph

FIG. 8

900
910
Retrieve $H_s$ in defined time interval
920
Determine whether $H_s$ in defined time interval violates a threshold
930
Calculate $H_s$ for defined time interval
940
Retrieve usage data
950
Calculate composite $H_s$

FIG. 9

1000
1002
Receive device context data
1004
Device state ?
1006
Monitor alarm Frequency
Increasing
1010
Compare with nearby devices
1016
Trigger maintenance
1012
Perform multivariate analysis
1014
Perform additional analysis
1018
End

FIG. 10A

1050
1052
Receive water usage data for a bathroom device from at least one flow sensor.
1054
Receive user presence data for a vicinity of the bathroom device from at least one presence sensor.
1056
Analyze the water usage data and the user presence data.
1058
Generate a maintenance message in response to the analysis.

FIG. 10B

1100
1102
Receive timeseries trend data from device
1104
Check for outliers ?
Yes
1106
List as alarm
1108
Create frequency counter by alarm/device/location
1110
Store alarm data
1112
Receive alarm data from device
1114
Create alarm list
Yes
1116
Abnormal threshold ?
1118
Prioritize alarms
1120
Transmit results

FIG. 11

1200
1202
Receive sensor data
1204
Generate initial occupancy for a space
1206
Compare initial occupancy with related spaces
1208
Calibrate initial occupancy based on comparison
1210
Generate composite occupancy

FIG. 12

1300
MALE RESTROOM 01
TUESDAY, 11 AUGUST 2020
11:21 AM
1310
DASHBOARD
1320
STATUS
1330
FEEDBACK
1340
SCHEDULE
1350
MAP
RESTROOM STATUS
1302
OCCUPANCY
20%
USER FEEDBACK
4.5 / 5
TODAY
5
LAST RATING
SANITIZATION SCHEDULE
10:15 AM
LAST SANITIZATION DONE
12:00 PM
NEXT PLANNED SANITIZATION
1302
FOOTFALL
212
VISITORS
ALERTS
!
0
ALERTS
CONSUMABLES
1302

FIG. 13

1402
TUESDAY, 11 AUGUST 2020
11:21 AM
MALE RESTROOM 01
RESTROOM STATUS
OCCUPANCY
20%
1408
USER FEEDBACK
4.5 / 5
1410
LAST SANITIZATION DONE
10:15 AM
1412
1404
1406
DASHBOARD
STATUS
FEEDBACK
SCHEDULE
MAP
1400
1320

FIG. 14

1500
MALE RESTROOM 01
TUESDAY. 11 AUGUST 2020
11:21 AM
CLOSEST ALTERNATIVE RESTROOM
DASHBOARD
STATUS
FEEDBACK
SCHEDULE
MAP
1350
1502
1508
1506
1504

FIG. 15

1600
MALE RESTROOM 01
TUESDAY, 11 AUGUST 2020
11:21 AM
DASHBOARD
STATUS
1330
FEEDBACK
SCHEDULE
MAP
FEEDBACK
PLEASE PROVIDE YOUR FEEDBACK TO HELP IMPROVE YOUR FUTURE EXPERIENCE
VISITOR SATISFACTION FEEDBACK
1602
1604
1604
VERY POOR
POOR
AVERAGE
GOOD
EXCELLENT
REQUEST CLEANING
NO TOILET PAPER
NO SOAP
REPORT AN ISSUE
1606
1608
1610
1612

FIG. 16

1700
MALE RESTROOM 01
TUESDAY, 11 AUGUST 2020
11:21 AM
DASHBOARD
STATUS
FEEDBACK
1340
SCHEDULE
MAP
SANITIZATION SCHEDULE
1702
TIME
SUPERVISOR VERFIFICATION
STATUS
7:00 AM
8:00 AM
9:00 AM
10:00 AM
1706
1708
1710
11:00 AM
1704
SANITIZATION IN PROGRESS
UPDATE
12:00 PM
SCHEDULED
UPDATE
1:00 PM
SCHEDULED
UPDATE

FIG. 17

1800
MALE RESTROOM 01
TUESDAY. 11 AUGUST 2020
11:21 AM
DASHBOARD
STATUS
FEEDBACK
SCHEDULE
MAP
1340
RESTROOM CLEANING CHECKLIST & CONFIRMATION
1802
SCHEDULED CLEANING TIME
11:00 AM
11 AUGUST 2020
CURRENT TIME
11:21 AM
11 AUGUST 2020
CLEANED BY
JOHN DOE
1804
1806
CLEANED TOILET BLOCKS
CLEANED MIRRORS AND SURFACES
CLEANED URINALS
CLEANED WASH BASINS
CLEARED DUSTBINS
REFILLED SOAP
REFILLED TOILET PAPER
SUBMIT
1808

FIG. 18

1900
1902
1904
1906
1908
1910
1912
1914
MONITORING
MAINTENANCE
SUSTAINABILITY
FAULT DETECTION
FACILITY MANAGEMENT
HYGIENE SCORE
CONTINUOUS IMPROVEMENT
DASHBOARD
OVERVIEW
MAP
1930
SEARCH
CLIENT
CLIENT TOWER, CO
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
CLIENT TOWER, TX
CLIENT TOWER, MI
1920
CLIENT > MONITORING > DASHBOARD
1934
1936
1938
1940
1942
BUILDING NAME
MAINTENANCE
SUBSTAINABILITY
VISITOR SATISFACTION
HYGIENE SCORE
SYSTEM HEALTH
1932
1944
CLIENT TOWER, CO
5 OVERDUE MAINTENANCE 4 ALERTS
3453 GALLONS WATER CONSUMPTION TODAY 2800 GALLONS AVERAGE DAILY CONSUMPTION
67%
198 / 200 DEVICES ONLINE
CLIENT TOWER, TX
4 OVERDUE MAINTENANCE 2 ALERTS
4426 GALLONS WATER CONSUMPTION TODAY 4200 GALLONS AVERAGE DAILY CONSUMPTION
75%
246 / 250 DEVICES ONLINE
CLIENT TOWER, MI
2 OVERDUE MAINTENANCE 1 ALERTS
2925 GALLONS WATER CONSUMPTION TODAY 2800 GALLONS AVERAGE DAILY CONSUMPTION
82%
180 / 180 DEVICES ONLINE
CLIENT TOWER, CA
0 OVERDUE MAINTENANCE 0 ALERTS
2750 GALLONS WATER CONSUMPTION TODAY 3000 GALLONS AVERAGE DAILY CONSUMPTION
85%
210 / 210 DEVICES ONLINE
CLIENT TOWER, HQ
0 OVERDUE MAINTENANCE 0 ALERTS
2812 GALLONS WATER CONSUMPTION TODAY 3100 GALLONS AVERAGE DAILY CONSUMPTION
87%
200 / 200 DEVICES ONLINE

FIG. 19

2000
1902
MONITORING
MAINTENANCE
SUSTAINABILITY
FAULT DETECTION
FACILITY MANAGEMENT
HYGIENE SCORE
CONTINUOUS IMPROVEMENT
2002
DASHBOARD
OVERVIEW
MAP
SEARCH
CLIENT > MONITORING > OVERVIEW
CLIENT
CLIENT TOWER, CO
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
CLIENT TOWER, TX
CLIENT TOWER, MI
SUSTAINABILITY
WATER CONSUMPTION TODAY
16366 GALLONS
AVERAGE DAILY CONSUMPTION
15900 GALLONS
MAINTENANCE
OVERDUE MAINTENANCE
11
COMPLETED /PLANNED MAINTENANCE
27 /36
HYGIENE SCORE
HYGIENE SCORE
80%
VISITOR SATISFACTION
TOTAL VISITORS
5550
AVERAGE USER FEEDBACK
3.6
SYSTEM HEALTH
DEVICES ONLINE
1034 /1040
FAULT DETECTION
ALERT
07
ALARMS
02
FACILITY MANAGEMENT
COMPLETED /PLANNED SANITIZATION
107 /150
OVERDUE SANITIZATION
14
USER ISSUES
REPORTED ISSUES
17
PENDING ISSUES
0
BUILDING RATING
HIGHEST VISITOR SATISFACTION
4.6
LOWEST VISITOR SATISFACTION
2.9
PORTFOLIO PERFORMANCE
MTTR
6 HRS
MTBF
7 DAYS
2004
2002
FIG. 20

2100
MONITORING
MAINTENANCE
SUSTAINABILITY
FAULT DETECTION
FACILITY MANAGEMENT
HYGIENE SCORE
CONTINUOUS IMPROVEMENT
DASHBOARD
OVERVIEW
MAP
SEARCH
CLIENT
CLIENT TOWER, CO
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
CLIENT TOWER, TX
CLIENT TOWER, MI
CLIENT > MONITORING > DASHBOARD
ROAD
UNITED STATES
2102
2104

FIG. 21

2200
2204
2208
2202
SEARCH
CLIENT
CLIENT TOWER, CO
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
CLIENT TOWER, TX
CLIENT TOWER, MI
CLIENT > CLIENT TOWER, CO > OVERVIEW
SUSTAINABILITY
7D 1M 3M 6M 1Y C
GALLONS
5000
0
1
15
30
BASELINE
ACTUAL CONSUMPTION
VISITOR SATISFACTION
7D 1M 3M 6M 1Y C
GALLONS
5
4
3
2
1
0
1
15
30
LOWER BASELINE
UPPER BASELINE
USER RATING
OVERDUE MAINTENANCE
7D 1M 3M 6M 1Y C
RANGE
10
5
0
1
15
30
PLANNED
COMPLETED
HYGIENE SCORE
7D 1M 3M 6M 1Y C
%
100
80
60
40
20
0
1
15
30
LOWER BASELINE
UPPER BASELINE
USER RATING
2206
2210

FIG. 22

2300
MONITORING
MAINTENANCE
SUSTAINABILITY
FAULT DETECTION
FACILITY MANAGEMENT
HYGIENE SCORE
CONTINUOUS IMPROVEMENT
2304
DASHBOARD
LAYOUT
DETAIL INFO
TREND
OUT OF ORDER
2302
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MONITORING > DASHBOARD
SUSTAINABILITY
WATER CONSUMPTION TODAY 34535 GALLONS
AVERAGE DAILY CONSUMPTION 2401 GALLONS
INFECTION CONTROL
HYGIENE SCORE 72%
FACILITY MANAGEMENT
LAST SANITIZATION DONE 10:15 AM
NEXT PLANNED SANITIZATION 12:00 PM
ALERT DETECTION
ALERT 02
ALARM 0
MAINTENANCE
LAST SCHEDULED MAINTANENCE 20 JULY 2020
NEXT SCHEDULED MAINTANENCE 20 AUGUST 2020
STATUS
33 /33
FAUCETS 10 /10
FLUSH VALVES 13 /13
SOAP DISPENSER 10 /10
FAUCETS
TOTAL ACTIVATIONS 200
TOTAL WATER CONSUMPTION 1500 GALLONS
AVERAGE WATER CONSUMPTION 223 GALLONS
FLUSH VALVES
TOTAL ACTIVATIONS 200
TOTAL WATER CONSUMPTION 346 GALLONS
TOTAL SOAP DISPENSED 223 GALLONS
SOAP DISPENSER
TOTAL ACTIVATIONS 200
AVERAGE SOAP DISPENSED 346 GALLONS
TOTAL SOAP DISPENSED 223 GALLONS
FOOTFALL
TOTAL VISITORS 421
USER FEEDBACK 4.5 /5
2304

FIG. 23

2400
MONITORING
MAINTENANCE
SUSTAINABILITY
FAULT DETECTION
FACILITY MANAGEMENT
HYGIENE SCORE
CONTINUOUS IMPROVEMENT
DASHBOARD
LAYOUT
DETAIL INFO
TREND
OUT OF ORDER
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MONITORING > LAYOUT
2402
2404
2406

FIG. 24

2500

MONITORING | MAINTENANCE | SUSTAINABILITY | FAULT DETECTION | FACILITY MANAGEMENT | HYGIENE SCORE | CONTINUOUS IMPROVEMENT

DASHBOARD | LAYOUT | **DETAIL INFO** | TREND | OUT OF ORDER

2502

SEARCH

- ENTERPRISE
- CENTER ONE BUILDING
- FLOOR 1
  - MALE RESTROOM 01
  - FEMALE RESTROOM 01
  - MALE RESTROOM 02
  - FEMALE RESTROOM 02
  - MALE RESTROOM 03
  - FEMALE RESTROOM 03
  - MALE RESTROOM 04

ENTERPRISE > CENTER ONE BUILDING > FLOOR 1 > MONITORING > DETAIL INFO

| DEVICE NAME (2504) | TYPE (2506) | BLOCK (2508) | SPACE (2510) | AVERAGE CONSUMPTION (GALLONS) (2512) | TOTAL CONSUMPTION (GALLONS) (2514) | TOTAL ACTIVATIONS (2516) | LEVEL (2518) | ALERT (2520) |
|---|---|---|---|---|---|---|---|---|
| FAUCET 01 | | WB1 | B1 F1 MALE RESTROOM 01 | 150 | 127.5 | 425 | - | ✓ |
| FAUCET 02 | | WB2 | B1 F1 MALE RESTROOM 01 | 140 | 85.2 | 284 | - | ✓ |
| FAUCET 03 | | WB3 | B1 F1 MALE RESTROOM 01 | 145 | 103.5 | 345 | - | ✓ |
| SOAP DISPENSER 01 | | WB1 | B1 F1 MALE RESTROOM 01 | 0.3 | 0.21 | 210 | 60% | ✓ |
| SOAP DISPENSER 02 | | WB2 | B1 F1 MALE RESTROOM 01 | 0.25 | 0.155 | 155 | 55% | ✓ |
| SOAP DISPENSER 03 | | WB3 | B1 F1 MALE RESTROOM 01 | 0.25 | 0.18 | 180 | 72% | ✓ |
| FLUSH VALVE 01 | | TB1 | B1 F1 MALE RESTROOM 01 | 600 | 500 | 200 | - | ⚠ |
| FLUSH VALVE 02 | | TB2 | B1 F1 MALE RESTROOM 01 | 650 | 400 | 160 | - | ✓ |
| FLUSH VALVE 03 | | U1 | B1 F1 MALE RESTROOM 01 | 550 | 437.5 | 175 | - | ⚠ |

FIG. 25

2600
MONITORING
MAINTENANCE
SUSTAINABILITY
FAULT DETECTION
FACILITY MANAGEMENT
HYGIENE SCORE
CONTINUOUS IMPROVEMENT
DASHBOARD
LAYOUT
DETAIL INFO
TREND
OUT OF ORDER
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MONITORING > TREND
WATER CONSUMPTION
2604
2608
2610
7D 1M 3M 6M 1Y C
5 AUG 2020 TO 11 AUG 2020
2602
2602
GALLONS
10 K
8 K
6 K
4 K
2 K
00
MON
TUE
WED
THU
FRI
SAT
SUN

FIG. 26

2700
MONITORING
MAINTENANCE
SUSTAINABILITY
FAULT DETECTION
FACILITY MANAGEMENT
HYGIENE SCORE
CONTINUOUS IMPROVEMENT
DASHBOARD
LAYOUT
DETAIL INFO
TREND
OUT OF ORDER
2702
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MONITORING > OUT OF ORDER
2706
FAULT
INACTIVE
2704
7D 1M 3M 6M 1Y C
5 AUG 2020 TO 11 AUG 2020
MON
TUE
WED
THU
FRI
SAT
SUN
FAUCET 01
FLUSH VALVE 01
FLUSH VALVE 03

FIG. 27

2800
1904
MONITORING
MAINTENANCE
SUSTAINABILITY
FAULT DETECTION
FACILITY MANAGEMENT
HYGIENE SCORE
CONTINUOUS IMPROVEMENT
DASHBOARD
REORDER STATUS
USER REPORTED ISSUES
PLANNED MAINTENANCE
ALERTS
OVERDUE MAINTENANCE
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MAINTENANCE > DASHBOARD
SUSTAINABILITY
WATER CONSUMPTION TODAY
34535 GALLONS
AVERAGE DAILY CONSUMPTION
2401 GALLONS
INFECTION CONTROLS
HYGIENE SCORE
72%
FACILITY MANAGEMENT
LAST SANITIZATION DONE
10:15 AM
NEXT PLANNED SANITIZATION
12:00 PM
FAULT DETECTION
ALERT
02
ALARM
0
2802
2804
USER REPORTED ISSUES
HYGIENE SCORE
72%
OVERDUE MAINTENANCE
OVERDUE TIME
B1F1 MALERESTROOM
24 HRS
PLANNED MAINTENANCE
PLANNED TIME
B1F1 MALERESTROOM
01 HRS
REORDER STATUS
OPEN ORDER
03
DUE ORDER TODAY
00
2804

FIG. 28

2900

MONITORING
MAINTENANCE
SUSTAINABILITY
FAULT DETECTION
FACILITY MANAGEMENT
HYGIENE SCORE
CONTINUOUS IMPROVEMENT

DASHBOARD
REORDER STATUS
USER REPORTED ISSUES
PLANNED MAINTENANCE
**ALERTS**
OVERDUE MAINTENANCE

SEARCH

ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04

ENTERPRISE > CENTER ONE BUILDING > FLOOR 1 > MAINTENANCE > ALERTS

2902

| BUILDING NAME (2904) | FLOOR (2906) | RESTROOM (2908) | DEVICE (2910) | ISSUE (2912) | OCCURRENCE TIME (2914) |
|---|---|---|---|---|---|
| CENTER ONE BUILDING | F1 | MALE RESTROOM 01 | FAUCET 01 | INACTIVE | 11 AUG 20202 11:15 AM |
| CENTER ONE BUILDING | F2 | FEMALE RESTROOM 01 | FAUCET 02 | INACTIVE | 11 AUG 20202 10:15 AM |

FIG. 29

3000
MONITORING
MAINTENANCE
SUSTAINABILITY
FAULT DETECTION
FACILITY MANAGEMENT
HYGIENE SCORE
CONTINUOUS IMPROVEMENT
DASHBOARD
REORDER STATUS
USER REPORTED ISSUES
PLANNED MAINTENANCE
ALERTS
OVERDUE MAINTENANCE
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MAINTENANCE > ALERTS
BUILDING 1 F1 MALE RESTROOM 01 FAUCET 01
OVERVIEW | SOP | PARTS | ANALYSIS
3008
3010
3002
3006
3004
DEVICE :FAUCET 01
ISSUE INACTIVE
LOCATION :CENTER ONE BUILDING F1 MALE RESTROOM 01
OCCURRENCE TIME :
LAST SERVICE TIME :30TH JULY 2020
NEXT SERVICE TIME :15 SEP 2019
LAST FAULT :
LAST FAULT TIME :

FIG. 30

3100
MONITORING
MAINTENANCE
SUSTAINABILITY
FAULT DETECTION
FACILITY MANAGEMENT
HYGIENE SCORE
CONTINUOUS IMPROVEMENT
DASHBOARD
REORDER STATUS
USER REPORTED ISSUES
PLANNED MAINTENANCE
ALERTS
OVERDUE MAINTENANCE
SEARCH
ENTERPRISE
CENTER ONE BUILDING
FLOOR 1
MALE RESTROOM 01
FEMALE RESTROOM 01
MALE RESTROOM 02
FEMALE RESTROOM 02
MALE RESTROOM 03
FEMALE RESTROOM 03
MALE RESTROOM 04
ENTERPRISE > CENTER ONE BUILDING > FLOOR 1 > MAINTENANCE > ALERTS
BUILDING 1 F1 MALE RESTROOM 01 FAUCET 01
OVERVIEW | SOP | PARTS | ANALYSIS
3004
3102
TROUBLESHOOTING GUIDE FROM INSTALATION
TROUBLE SHOOTING

FIG. 31

3200

MONITORING | MAINTENANCE | SUSTAINABILITY | FAULT DETECTION | FACILITY MANAGEMENT | HYGIENE SCORE | CONTINUOUS IMPROVEMENT

DASHBOARD | REORDER STATUS | USER REPORTED ISSUES | PLANNED MAINTENANCE | **ALERTS** | OVERDUE MAINTENANCE

SEARCH

ENTERPRISE

CENTER ONE BUILDING

FLOOR 1

MALE RESTROOM 01

FEMALE RESTROOM 01

MALE RESTROOM 02

FEMALE RESTROOM 02

MALE RESTROOM 03

FEMALE RESTROOM 03

MALE RESTROOM 04

ENTERPRISE > CENTER ONE BUILDING > FLOOR 1 > MAINTENANCE > ALERTS

3202

BUILDING 1 F1 MALE RESTROOM 01 FAUCET 01

OVERVIEW | SOP | **PARTS** | ANALYSIS

3006 3204 3208 3210

| PART NAME | PART NUMBER | LEAD TIME | ACTION |
| --- | --- | --- | --- |
| VALVE | VAV001 | 02 DAYS | PLACE ORDER |
| ADOPTER | ADOPTER00122 | 02 DAYS | PLACE ORDER |
| ADOPTER | IOTV10003 | 05 DAYS | PLACE ORDER |

3204 3212

FIG. 32

3300

MONITORING MAINTENANCE SUSTAINABILITY FAULT DETECTION FACILITY MANAGEMENT HYGIENE SCORE CONTINUOUS IMPROVEMENT

DASHBOARD REORDER STATUS **USER REPORTED ISSUES** PLANNED MAINTENANCE ALERTS OVERDUE MAINTENANCE

SEARCH

ENTERPRISE

CENTER ONE BUILDING

FLOOR 1

MALE RESTROOM 01

FEMALE RESTROOM 01

MALE RESTROOM 02

FEMALE RESTROOM 02

MALE RESTROOM 03

FEMALE RESTROOM 03

MALE RESTROOM 04

ENTERPRISE > CENTER ONE BUILDING > FLOOR 1 > MAINTENANCE > USER REPORTED ISSUES

3302

| BUILDING NAME 3304 | FLOOR 3306 | RESTROOM 3308 | REPORTED TIME 3310 | ACTION 3312 |
|---|---|---|---|---|
| CENTER ONE BUILDING | FLOOR 1 | MALE RESTROOM 01 | 11 AUG 2020 10:15 AM | RESOLVE ISSUE |
| CENTER ONE BUILDING | FLOOR 1 | MALE RESTROOM 01 | 11 AUG 2020 11:33 AM | RESOLVE ISSUE |
| CENTER ONE BUILDING | FLOOR 1 | MALE RESTROOM 01 | 11 AUG 2020 11:55 AM | RESOLVE ISSUE |

3314

FIG. 33

Europäisches Patentamt
European Patent Office
Office européen des brevets

# EUROPEAN SEARCH REPORT

Application Number
EP 21 19 8574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/028798 A1 (AS AMERICA INC [US]) 6 February 2020 (2020-02-06)<br>* paragraph [0042] - paragraph [0048] *<br>* paragraph [0085] - paragraph [0089] *<br>* paragraph [0095] - paragraph [0100] *<br>* paragraph [0111] - paragraph [0112] *<br>* paragraph [0123] - paragraph [0126] *<br>----- | 1-15 | INV.<br>G06Q10/06 |
| | | | TECHNICAL FIELDS SEARCHED (IPC) |
| | | | G06Q |

1 The present search report has been drawn up for all claims

| Place of search | Date of completion of the search | Examiner |
|---|---|---|
| Munich | 1 February 2022 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 19 8574

This annex lists the patent family members relating to the patent documents cited in the above-mentioned European search report. The members are as contained in the European Patent Office EDP file on
The European Patent Office is in no way liable for these particulars which are merely given for the purpose of information.

01-02-2022

| Patent document cited in search report | Publication date | Patent family member(s) | Publication date |
|---|---|---|---|
| WO 2020028798 A1 | 06-02-2020 | AU 2019316045 A1 | 25-02-2021 |
| | | CA 3106994 A1 | 06-02-2020 |
| | | CN 112513385 A | 16-03-2021 |
| | | EP 3830350 A1 | 09-06-2021 |
| | | JP 2021533291 A | 02-12-2021 |
| | | KR 20210065932 A | 04-06-2021 |
| | | SG 11202101010T A | 25-02-2021 |
| | | US 2021157340 A1 | 27-05-2021 |
| | | WO 2020028798 A1 | 06-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63086948
- US 47841321